# FASCICULE DE BREVET EUROPEEN

(11) **EP 0 734 510 B1**
(45) Date de publication et mention de la délivrance du brevet: **27.01.1999**
(21) Numéro de dépôt: 95902814.3
(22) Date de dépôt: 30.11.1994
(51) Int. Cl.: G01F 15/10, G01F 15/00

(54) **PROCEDE ET DISPOSITIF DE SURVEILLANCE DE L'EVOLUTION DE LA VALEUR COURANTE D'UN DEBIT DE FLUIDE DANS UN COMPTEUR DE FLUIDE**
VERFAHREN UND VORRICHTUNG ZUR ÜBERWACHUNG DER ENTWICKLUNG DES AKTUELLEN STRÖMUNGSWERTES IN EINEM ZÄHLER
METHOD AND DEVICE FOR MONITORING CHANGES IN THE CURRENT VALUE OF A FLUID FLOW RATE IN A FLUID METER

(30) Priorité: 07.12.1993 FR 9314664
(43) Date de publication de la demande: 02.10.1996
(73) Titulaire: SCHLUMBERGER INDUSTRIES S.A., 92120 Montrouge (FR)
(72) Inventeur: PLISSON, François, F-78530 Buc (FR); JANET, Philippe, F-95610 Eragny-sur-Oise (FR); PUYBARET, Frédéric, F-92700 Colombes (FR)
(86) Numéro de dépôt international: FR9401396
(87) Numéro de publication internationale: WO9516189

(56) Documents cités:
- EP-A- 0 264 856
- EP-A- 0 328 031
- FR-A- 2 663 416
- PATENT ABSTRACTS OF JAPAN vol. 7 no. 164 (P-211) [1309] ,19 Juillet 1983 & JP,A,58 072011 (MATSUSHITA) 28 Avril 1983,

## Description

La présente invention est relative à un procédé de surveillance de l'évolution de la valeur courante d'un débit de fluide dans un compteur de fluide ainsi qu'à un compteur de fluide comprenant un dispositif pour la mise en oeuvre dudit procédé.

Parmi les compteurs de fluide, on connaît notamment deux types, les compteurs volumétriques à membranes et les compteurs à turbine qui présentent une caractéristique commune, à savoir que ces compteurs comprennent une unité de mesure, encore appelée bloc mesureur, dans laquelle circule un volume de fluide et à laquelle est relié un axe qui est entraîné en rotation autour de lui même sous l'effet de la circulation du fluide dans ladite unité de mesure.

Cet axe peut être directement relié à l'unité de mesure comme dans un compteur à turbine ou indirectement relié à ladite unité de mesure comme dans un compteur volumétrique à membranes.

Chaque tour effectué par l'axe de rotation représente un volume de fluide donné qui est fonction du compteur.

Ainsi, pour déterminer la valeur courante du débit de fluide dans le compteur, il suffit de détecter de manière précise le mouvement de rotation de l'axe au cours du temps.

Or, il est très difficile de détecter précisément ce mouvement de rotation en raison par exemple des frottements mécaniques des différents éléments en mouvement dans le compteur et de la mécanique de mesure dudit compteur qui créent des irrégularités dans le mouvement de rotation et il s'ensuit des discontinuités dans la variation de la vitesse de rotation de l'axe.

En outre, l'axe peut être soumis à de légères oscillations. Tous ces phénomènes entraînent une mauvaise connaissance des instants exacts où l'on échantillonne la position de l'axe ce qui rend très difficile le traitement électronique ultérieur qui permet de déterminer un débit de fluide.

Par ailleurs, lorsqu'un compteur de ce type est équipé de sa propre source d'énergie, par exemple une batterie, il convient de réduire le plus possible la consommation énergétique dudit compteur afin d'augmenter la durée de vie de la source d'énergie.

Toutefois, on demande aux compteurs de fluide non seulement de déterminer avec précision et à faible coût énergétique la valeur courante du débit de fluide mais également de surveiller l'évolution temporelle de cette valeur, sur un continuum de débits par rapport à certaines valeurs prédéterminées du débit de fluide comprises dans ce continuum.

En effet, lorsque le débit de fluide atteint par exemple la valeur prédéterminée maximale de la gamme métrologique de débits du compteur, il est nécessaire de fermer rapidement une vanne située en amont du compteur de fluide pour des raisons de sécurité.

Pour ce faire, il faut connaître avec précision la valeur courante du débit de fluide sur toute la gamme jusqu'à la valeur prédéterminée maximale.

Par exemple pour un compteur de gaz domestique, une précision de l'ordre de 2 à 5% sur la détermination de la valeur maximale du débit est exigée.

Par ailleurs, au cours du fonctionnement du compteur de fluide, le débit peut varier brusquement et prendre une valeur supérieure à la valeur prédéterminée maximale, valeur qualifiée de surdébit.

Il est alors impératif, d'une part, de s'apercevoir rapidement de cette augmentation de la valeur courante du débit et, d'autre part, de pouvoir agir immédiatement sur la vanne.

Par exemple, pour un compteur de gaz domestique dont la valeur maximale du débit est de 6m³/h, le surdébit peut atteindre en 100ms des valeurs de l'ordre de 50m³/h et l'on dispose alors d'environ quinze secondes pour fermer la vanne.

On constate donc qu'il est très important de surveiller l'évolution du débit de fluide par rapport à ces valeurs de débit maximal et de surdébit mais il est également fondamental de pouvoir suivre cette évolution sur tout le continuum de débits c'est -à-dire de ne pas manquer de détections de la position de l'axe lorsqu'ils traduisent une augmentation de la vitesse de rotation de l'axe et donc du débit.

On connaît l'utilisation de capteurs magnétiques pour détecter le mouvement de rotation de l'axe. Dans une telle configuration, un capteur magnétique est solidaire de l'axe de rotation, un autre capteur magnétique est assujetti à un support fixe et, à chaque tour de l'axe, lorsque les deux capteurs sont l'un en face de l'autre, le capteur fixe délivre une impulsion qui correspond à un volume de fluide donné. Néanmoins, pour résister à l'action de champs magnétiques extérieurs, de tels compteurs de fluide comportant des capteurs magnétiques doivent être équipés d'une protection particulière telle que par exemple un blindage magnétique.

Il est également connu de recourir à des systèmes de détection résonnants pour détecter le mouvement de rotation de l'axe mais de tels systèmes ne conviennent pas pour répondre au problème posé. La présente invention vise à remédier aux inconvénients de l'art antérieur en proposant un procédé de surveillance de l'évolution de la valeur courante du débit de fluide dans un compteur de fluide ainsi qu'un compteur de fluide comprenant un dispositif pour la mise en oeuvre dudit procédé, permettant notamment de détecter, sur un continuum de débits, un débit maximal et un surdébit tout en consommant aussi peu d'énergie que possible.

La présente invention a ainsi pour objet un procédé de surveillance de l'évolution de la valeur courante d'un débit de fluide dans un compteur de fluide qui comprend une unité de mesure et un axe de rotation relié à ladite unité de mesure et apte à entrer en rotation autour de lui même lorsqu'un volume de fluide traverse l'unité de mesure, caractérisé en ce qu'il consiste à détecter les mouvements de rotation et de non rotation de l'axe suivant une fréquence dite d'échantillonnage variable selon une loi d'échantillonnage prédéterminée, ladite fréquence étant définie en fonction d'au moins une valeur prédéterminée de débit de fluide, et à traiter électroniquement des informations correspondant à une détection et à une non détection d'un mouvement de rotation de l'axe suivant ladite fréquence d'échantillonnage afin de déterminer, sur un continuum de débits, la valeur courante du débit de fluide par rapport à la valeur prédéterminée de débit de fluide incluse dans ledit continuum de débits.

Selon une autre caractéristique de l'invention:
- on détecte les mouvements de rotation et de non rotation de l'axe suivant au moins deux valeurs f₁ et f₂ de la fréquence d'échantillonnage prédéterminées par la loi d'échantillonnage de telle façon que f₁ soit définie en fonction d'une première valeur prédéterminée de débit de fluide Q₁, f₂ soit définie en fonction de Q₁ et d'une deuxième valeur prédéterminée de débit de fluide Q₂, avec f₁ < f₂ et Q₁ < Q₂, et qu'ainsi les fréquences f₁ et f₂ définissent deux gammes de débits du continuum qui se recouvrent partiellement, l'une allant jusqu'à une valeur de débit Q'₁ définie par la fréquence f₁, avec Q₁ < Q'₁ < Q₂, et l'autre allant d'une valeur de débit Q'₂ définie par ladite fréquence f₁ jusqu'à la valeur Q₂, avec Q₁ < Q'₂ < Q'₁, et l'on traite électroniquement les informations suivant lesdites fréquences f₁ et f₂ afin de déterminer la valeur courante du débit de fluide par rapport auxdites gammes de débits.

Avantageusement, le procédé selon l'invention permet de déterminer dans quelle gamme de débits se trouve la valeur courante du débit de fluide.
La caractéristique selon laquelle les gammes de débits se recouvrent partiellement et qui est due au choix particulier de la loi d'échantillonnage permet finalement de suivre de manière très fiable tous les mouvements de rotation de l'axe sur une large plage de vitesses de rotation, c'est à dire de surveiller l'évolution de la valeur courante du débit sur tout le continuum de débits.

Selon d'autres caractéristiques de l'invention:
- avant de traiter électroniquement des informations ledit procédé consiste à effectuer les étapes suivantes:
   1) on génère plusieurs signaux électriques consécutifs suivant la fréquence d'échantillonnage variable selon la loi d'échantillonnage prédéterminée,
   2) on alimente avec chacun desdits signaux électriques au moins un capteur placé en regard de la trajectoire d'au moins un repère associé à l'axe de rotation et destiné à délivrer un état de sortie binaire selon la position dudit capteur par rapport audit repère,
   3) à partir desdits états de sortie binaires, on forme un signal de sortie qui représente la succession temporelle des informations correspondant à une détection et à une non détection d'un mouvement de rotation de l'axe, chaque détection représentant un volume de fluide donné,
- au cours de l'étape 1):
   a) durant un premier intervalle de temps Δt₁, on génère au moins un signal électrique suivant la fréquence f₁,
   b) durant un second intervalle de temps Δt₂ consécutif à Δt₁, on génère au moins un signal électrique suivant la fréquence f₂,
   c) et l'on répète les étapes précédentes.
- Au cours du procédé selon l'invention:
   a) on traite électroniquement en permanence à la fréquence d'échantillonnage f₁ les informations de détection et de non détection du mouvement de rotation de l'axe issues du signal de sortie,
   b) au bout d'un intervalle de temps Δt₁ de traitement électronique des informations à ladite fréquence f₁, simultanément, on traite électroniquement des informations de détection et de non détection du mouvement de rotation de l'axe dudit signal de sortie à la fréquence d'échantillonnage f₂,
   c) et l'on répète les étapes précédentes.

- la fréquence f₂ dépend de la fréquence f₁.
- la fréquence f₂ est supérieure ou égale à └*Q*₂/2*Q*'₂┘ f₁, où └*x*┘ représente le premier entier supérieur ou égal à x,
- la fréquence d'échantillonnage f₁ est strictement supérieure à deux fois la valeur de la fréquence de rotation de l'axe qui est obtenue lorsque la valeur courante du débit de fluide est égale à Q₁.

Selon encore d'autres caractéristiques de l'invention:
- on associe une pluralité de repères à l'axe de rotation,
- au lieu de générer plusieurs signaux consécutifs aux fréquences respectives f₁ et f₂, on génère en permanence plusieurs signaux consécutifs suivant une fréquence d'échantillonnage f₃ supérieure à la fréquence f₂ et choisie en fonction d'une valeur prédéterminée de débit de fluide Q₃, avec Q₃ < Q₁, de f₂ et du nombre de repères, et l'on compte le nombre de détections de mouvement de rotation de l'axe afin de déterminer la valeur courante du débit de fluide par rapport aux valeurs prédéterminées Q₁ et Q₃,
- simultanément, on traite électroniquement en permanence aux fréquences d'échantillonnage f₁ et f₂ les informations du signal de sortie pour déterminer la valeur courante du débit de fluide par rapport aux valeurs prédéterminées Q₁ et Q₂, et plus particulièrement par rapport aux deux gammes de débits,
- la fréquence f₃ est supérieure au produit du nombre de repères par la fréquence f₂,
- au cours du traitement électronique des informations à la fréquence d'échantillonnage f₁, on sélectionne un nombre I₁ d'informations du signal de sortie en les mémorisant à la fréquence d'échantillonnage f₁ pendant un intervalle de temps I₁/f₁, on somme ces I₁ informations au fur et à mesure de leur mémorisation afin de déterminer avec une précision qui dépend de I₁ et de f₁ la valeur courante du débit de fluide jusqu'à la valeur prédéterminée Q'₂,
- avant de sommer les I₁ informations, on leur affecte à chacune un coefficient de pondération, ceci afin d'améliorer la précision sur la détermination de la valeur courante du débit de fluide,
- on mémorise les I₁ informations dans un registre à décalage constitué de I₁ bits et l'on affecte un coefficient de pondération identique et maximal pour chacun des bits centraux et des coefficients respectivement croissants et décroissants pour les bits correspondant aux dernières et aux premières informations mémorisées,
- au cours du traitement électronique des informations à la fréquence d'échantillonnage f₂, on sélectionne un nombre prédéfini I₂ d'informations du signal de sortie et l'on identifie le nombre d'informations de détections du mouvement de l'axe parmi ces I₂ informations, si le nombre identifié est au moins égal à un nombre prédéterminé I₃, alors la valeur courante du débit de fluide est comprise entre les valeurs prédéterminées de débit de fluide Q'₂ et Q₂ et, dans la négative, ladite valeur courante est inférieure à Q'₂,
- le nombre prédéfini I₂ d'informations dépend de f₂, Q₁ et du nombre de repères,
- le nombre I₃ dépend de Q₁ et du nombre de repères,
- préalablement à la reconstitution du signal, on détermine si le mouvement de l'axe est un mouvement de rotation ou d'oscillation en alimentant en alternance un autre capteur et en identifiant, et sélectionnant les états de sortie binaires successifs des capteurs,
- le capteur est un capteur optique.

La présente invention a également pour objet un compteur de fluide comprenant une unité de mesure d'un volume de fluide à laquelle est relié un axe de rotation dont chaque tour représente un volume de fluide traversant ladite unité de mesure et un dispositif de surveillance de l'évolution de la valeur courante du débit de fluide à partir de la rotation dudit axe pour la mise en oeuvre du procédé. Ledit dispositif comprend:
- au moins un capteur placé en regard de la trajectoire d'au moins un repère associé à l'axe de rotation et destiné à délivrer une information binaire selon la position dudit capteur par rapport audit repère,
- des moyens de génération de signaux électriques consécutifs suivant une fréquence dite d'échantillonnage variable selon une loi d'échantillonnage prédéterminée pour l'alimentation dudit capteur optique, chaque valeur de fréquence étant définie en fonction d'au moins une valeur prédéterminée de débit de fluide
- des moyens de formation d'un signal de sortie à partir d'états de sortie binaires délivrés par le capteur, ledit signal de sortie représentant la succession temporelle des informations de détection et de non détection d'un mouvement de rotation de l'axe,
- des moyens de traitement électronique desdites informations suivant ladite fréquence d'échantillonnage afin de déterminer, sur un continuum de débits, la valeur courante du débit de fluide par rapport à la valeur prédéterminée du débit de fluide dont dépend la valeur de la fréquence d'échantillonnage.

Selon d'autres caractéristiques de l'invention:
- les moyens de traitement électronique des informations comprennent notamment des moyens pour sélectionner un nombre d'informations du signal de sortie prédéfini et différent suivant chaque valeur prise par la fréquence d'échantillonnage,
- les moyens de traitement électronique des informations comprennent des moyens pour sélectionner un nombre prédéfini I₁ d'informations du signal de sortie à une valeur f₁ de la fréquence d'échantillonnage choisie en fonction d'une valeur prédéterminée de débit de fluide Q₁, lesdits moyens étant des moyens de mémorisation, ainsi que des moyens de sommation des I₁ informations mémorisées pour déterminer avec une précision dépendant de I₁ et f₁ la valeur courante du débit de fluide sur une gamme de débits du continuum allant jusqu'à une valeur supérieure à Q₁ et définie par le choix de f₁,
- les moyens de mémorisation des informations comprennent au moins un registre à décalage constitué de I₁ bits destinés à recevoir chacun une information à la fréquence d'échantillonnage f₁,
- les moyens de traitement électronique comprennent également des moyens de pondération des I₁ bits suivant une loi affectant un coefficient de pondération identique et maximal pour chacun des bits centraux et des coefficients de pondération respectivement croissants et décroissants pour les bits correspondant aux dernières et aux premières informations mémorisées ladite loi de pondération permettant d'améliorer la précision sur la détermination de la valeur courante du débit,
- les moyens de traitement électronique des informations comprennent des moyens pour sélectionner un nombre prédéfini I₂ d'informations du signal de sortie à une valeur f₂ de la fréquence d'échantillonnage, f₂ dépendant de f₁, de Q₁ et d'une deuxième valeur prédéterminée de débit de fluide Q₂, avec f₁ < f₂, Q₁ < Q₂, et I₂ dépendant de f₂, de Q₁ et du nombre de repères, ainsi que des moyens pour identifier parmi ces I₂ informations le nombre d'informations de détection du mouvement de l'axe, ce nombre permettant de déterminer si la valeur courante du débit de fluide est comprise dans la gamme de débits allant jusqu'à la valeur supérieure à Q₁ ou dans une gamme s'étendant de ladite valeur jusqu'à Q_{2,}
- le capteur est un capteur optique et les repères sont des repères visuels.

Selon encore d'autres caractéristiques de l'invention:
- le dispositif de surveillance de l'évolution de la valeur courante du débit de fluide comprend une roue liée au mouvement de rotation de l'axe et qui est pourvue d'un nombre de dents ou repères visuels égal à D₁,
- le dispositif de surveillance de l'évolution de la valeur courante du débit de fluide comprend une autre roue liée au mouvement de rotation de l'axe et qui est pourvue d'un nombre de dents ou repères visuels égal à D₂, D₂ > D₁,
- le dispositif de surveillance de l'évolution de la valeur courante du débit de fluide comprend des moyens pour déterminer si le mouvement de l'axe est un mouvement de rotation ou d'oscillation,
- les moyens pour déterminer si le mouvement de l'axe est un mouvement de rotation ou d'oscillation comprennent un deuxième capteur optique pour chaque roue disposé par rapport au premier capteur optique selon un angle égal à la moitié de la largeur d'une des dents,
- chaque capteur optique est formé d'un émetteur et d'un récepteur placés en regard l'un de l'autre et de part et d'autre de la trajectoire des dents de la roue.

D'autres caractéristiques et avantages de l'invention apparaîtront au cours de la description qui va suivre, donnée uniquement à titre d'exemple non limitatif et faite en référence aux dessins annexés sur lesquels:
- la figure 1 est un diagramme représentant l'évolution de la valeur courante du débit de gaz échantillonné en fonction du débit réel de gaz,
- la figure 2 est un schéma montrant les différentes gammes de débits surveillées par le procédé selon l'invention,
- la figure 3 est une vue schématique de dessus des roues dentées et des capteurs optiques du dispositif selon l'invention,
- la figure 4 est une vue schématique de côté des roues dentées et des capteurs optiques du dispositif selon la figure 3,
- la figure 5 est une vue schématique représentant les différents blocs électroniques fonctionnels du dispositif selon,
- la figure 6 est une vue représentant la génération des séquences d'impulsions VA et VB d'alimentation des capteurs optiques A et B,
- la figure 7 est une vue représentant les différents signaux utilisés dans le dispositif selon l'invention,
- la figure 8 est une vue détaillée du bloc électronique 60 du dispositif selon l'invention
- la figure 9 est une vue détaillée du bloc électronique 80 du dispositif selon l'invention.

L'invention s'applique tout particulièrement à un compteur de gaz domestique à membranes largement connu qui ne sera donc pas décrit dans l'exposé qui suit.

Un tel compteur domestique non représenté sur les figures est par exemple décrit dans le brevet européen N°0 128 838 et comprend une unité de mesure d'un volume de gaz, encore appelé bloc mesureur, et qui est relié à une extrémité d'un axe de rotation 1 par l'intermédiaire d'un système de transmission mécanique.

Chaque tour de l'axe représente un volume de gaz qui traverse l'unité de mesure du compteur.

Le compteur de gaz comprend également un dispositif 10 de surveillance de l'évolution de la valeur courante du débit de gaz comprenant un système pour échantillonner c'est-à-dire pour détecter à des instants différents la position de l'axe de rotation 1 au cours du temps et qui sera décrit ultérieurement.

Le problème tel qu'il se pose la plupart du temps dans les compteurs de gaz du type évoqué ci-dessus équipés de leur propre source d'énergie consiste à surveiller l'évolution de la valeur courante du débit de fluide sur un continuum de débits s'étendant d'une valeur prédéterminée Q₀, pouvant être égale à zéro, jusqu'à une valeur prédéterminée Q₁ = Qₘₐₓ incluse dans ledit continuum de débits, la valeur de surdébit étant notée Q₂, avec Q₀ <Q₁ < Q_{2.}

Le compteur de gaz selon l'invention doit permettre de situer la valeur courante du débit de fluide par rapport aux valeurs prédéterminées Q₁ et Q₂ pour savoir si le compteur est en régime de surdébit (ce régime pouvant s'établir par exemple en 100ms) ou si le compteur est en régime normal de comptage dans sa gamme métrologique de Q₀ à Q₁ (Qₘₐₓ), tout en consommant aussi peu d'énergie que possible. Plus particulièrement, l'invention permet également de déterminer avec une précision suffisante la valeur courante du débit de gaz depuis Q₀ jusqu'à Q₁ et même au delà de cette valeur.

D'une manière générale, le procédé selon l'invention consiste, d'une part, à détecter les mouvements de rotation et de non rotation de l'axe suivant une fréquence, appelée fréquence d'échantillonnage, qui est variable selon une loi d'échantillonnage prédéterminée et, d'autre part, à traiter électroniquement des informations correspondants à une détection et à une non détection d'un mouvement de rotation de l'axe suivant ladite fréquence d'échantillonnage.

La fréquence d'échantillonnage est définie en fonction d'au moins une valeur prédéterminée de débit de gaz.

Dans l'exemple qui nous intéresse, la loi d'échantillonnage est établie pour deux fréquences d'échantillonnage f₁ et f₂ afin de déterminer la valeur courante du débit de gaz par rapport aux valeurs prédéterminées Q₁ et Q₂.

La fréquence f₁ est ainsi définie en fonction de la valeur Q₁ et la fréquence f₂ est définie en fonction de Q₁ et Q₂ et est supérieure à f₁. Ces fréquences sont avantageusement choisies pour définir deux gammes de débits reconstituant le continuum de débits et qui se recouvrent partiellement de manière à n'omettre aucune détection de mouvement de rotation de l'axe et donc aucune valeur de débit dans ledit continuum.

Le choix avantageux d'une fréquence d'échantillonnage f₁ du mouvement de rotation de l'axe qui soit strictement supérieure à deux fois la valeur que prend la fréquence f de rotation de l'axe quand la valeur courante du débit est égale à Q₁ (Qₘₐₓ) , permet de définir une gamme de débits a allant de Q₀ jusqu'à une valeur de débit Q'₂, avec Q₁ < Q'₂ < Q₂.

Le choix de cette valeur de la fréquence permet de déterminer avec précision la valeur courante du débit et notamment de détecter la valeur du débit Qₘₐₓ, non seulement depuis Q₀ jusqu'à Qₘₐₓ mais de Q₀ jusqu'à la valeur Q'₂. Par exemple f₁ = 2,5f (Qₘₐₓ) et Q'₂ prend ainsi la valeur 1,25 Qₘₐₓ.

Si l'on choisissait une fréquence f₁ égale à la valeur 2f(Qₘₐₓ), on ne pourrait déterminer avec précision la valeur courante du débit que sur la gamme de débits allant de Q₀ à Qₘₐₓ et l'on ne bénéficieerait pas d'une plage de débits autour de Qₘₐₓ pour obtenir une meilleure précision sur la détermination de cette valeur.

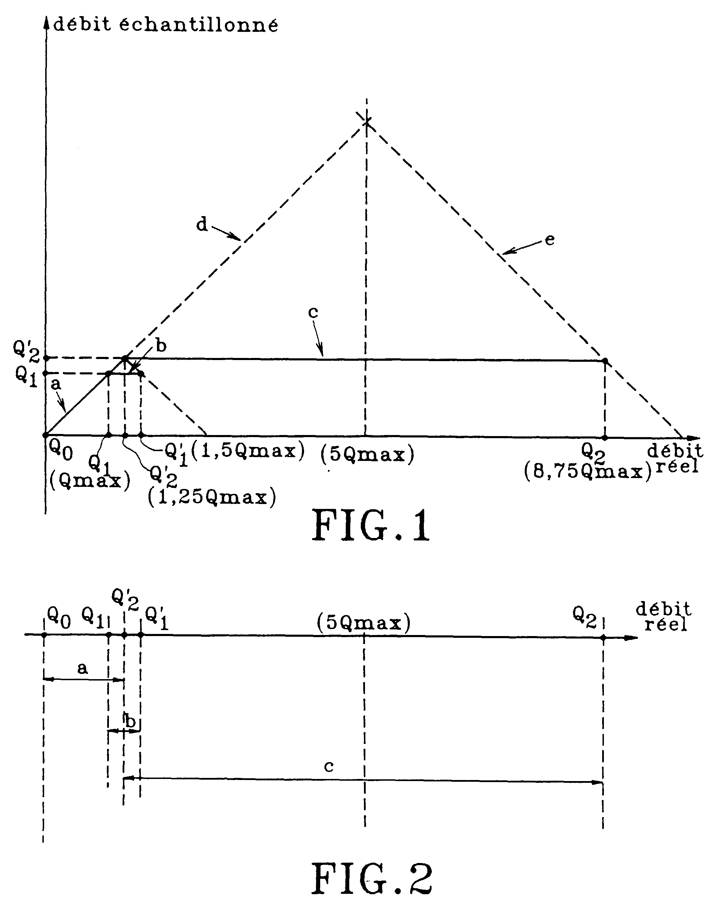

La figure 1 est un diagramme représentant l'évolution de la valeur courante du débit de gaz telle qu'échantillonnée par le système précédemment évoqué en fonction du débit réel de gaz, pour les valeurs f₁ et f₂ de la fréquence d'échantillonnage.
Comme le montre cette figure, la droite repérée par la lettre a et d'équation y=x illustre le fait que lorsque le débit réel de gaz croît de Q₀ à Q'₂ = 1,25Qₘₐₓ, le débit échantillonné croît également de Q₀ à Q'₂ et il peut donc être déterminé avec précision sur la gamme a.

Sur la figure 2 qui représente la répartition et le recouvrement partiel des gammes de débits définies par le procédé selon l'invention dans le continuum de débits (Q₀-Q₂), on repère également la gamme a précédemment définie.
En outre, comme celà apparait sur la figure 1 dans la partie du diagramme représentée par un triangle et comprise entre les débits réels Q₁ et Q'₁ et les débits échantillonnés Q₁ et Q'₂ (= 1,25Qmax), lorsque le débit réel augmente de Q₁ à Q'₁, le débit échantillonné croît en empruntant la portion de droite y = x jusqu'à la valeur Q'₂ puis décroît en suivant la portion de droite y = -x jusqu'à la valeur Q₁. Ce phénomène que l'on appelle repliement de spectre autour de la valeur Q'₂ permet en fait, quand la détection de Qₘₐₓ est effectuée et lorsque le débit échantillonné augmente puis décroît en restant supérieur à Q_{max,} de déduire que la valeur courante du débit est comprise dans la gamme b, représentée par une portion de droite horizontale formant la base du triangle précédemment évoqué. La figure 2 montre clairement que la gamme b obtenue grâce au phénomène de repliement de spectre permet d'étendre la gamme de détection de débits a jusqu'à Q'₁ = 1,5 Qₘₐₓ, définissant ainsi une gamme de débits de Q₀ à Q'₁.

Si l'on veut pouvoir détecter un surdébit entre les deux valeurs prédéterminées de débit de fluide Q₁ et Q2 telles que représentées sur les figures 1 et 2, il convient, de choisir une fréquence f₂ qui dépend de la fréquence f₁ et plus particulièrement qui est supérieure ou égale à l'expression └*Q*₂/2*Q*'₂┘ f₁ où *└Q*₂/2*Q*'₂┘ représente le premier entier supérieur ou égal à Q₂ / 2Q'₂ ce qui définit une gamme de débits s'étendant deQ'₂ = 1,25 Qₘₐₓ à 5 Q_{max,} par exemple pour f₂ = 4f₁, avec Q₁ = 6 m³/h et Q₂ = 50 m³/h. Cette fréquence f₂ permettrait en fait de déterminer précisément la valeur courante du débit lorsque le débit réel croît de 1,25 Qₘₐₓ à 5 Qₘₐₓ mais, en raison du phénomène de repliement de spectre, le procédé ne permettrait pas de déterminer la valeur courante du débit pour un débit réel croissant de 5 Qₘₐₓ à Q₂ = 8,75 Qₘₐₓ.
Par contre, si l'on voulait déterminer précisément la valeur courante du débit sur toute la gamme c, il faudrait augmenter la valeur de la fréquence d'échantillonnage et donc accroître de manière intempestive la consommation énergétique du compteur de gaz.

Cependant, en utilisant le repliement de spectre par rapport à la valeur 5 Qₘₐₓ et en détectant le passage de la valeur courante du débit par un seuil prédéterminé égal à Q'₂, le procédé selon l'invention permet de déterminer, après détection de ce seuil, que la valeur courante du débit est comprise entre Q'₂ et Q₂ (gamme c) et donc que le régime de surdébit est atteint.

Cette caractéristique est très avantageuse étant donné que l'on peut couvrir une large gamme c sans avoir besoin de déterminer précisément la valeur courante du débit.
En outre, le choix de la fréquence est judicieux car les deux gammes de débits Q0 - Q'₁ et Q'₂ - Q₂ sont ainsi en recourvement partiel et il n'st donc pas possible d'omettre des valeurs de débits entre les gammes de débits.
Ainsi, l'invention permet de surveiller l'évolution de la valeur courante du débit de fluide sur un continuum de débits grâce à une loi d'échantillonnage adaptée.

Si l'on échantillonne suivant d'autres fréquences que celles déterminées par la Demanderesse, cela peut aboutir à deux gammes de débits juxtaposées, auquel cas, compte tenu des irrégularités du mouvement de rotation, il est possible d'omettre certaines détections de mouvement de rotation de l'axe et donc certaines valeurs de débits à la limite de ces deux gammes.
D'autre part, cela peut également entraîner une forte consommation énergétique.

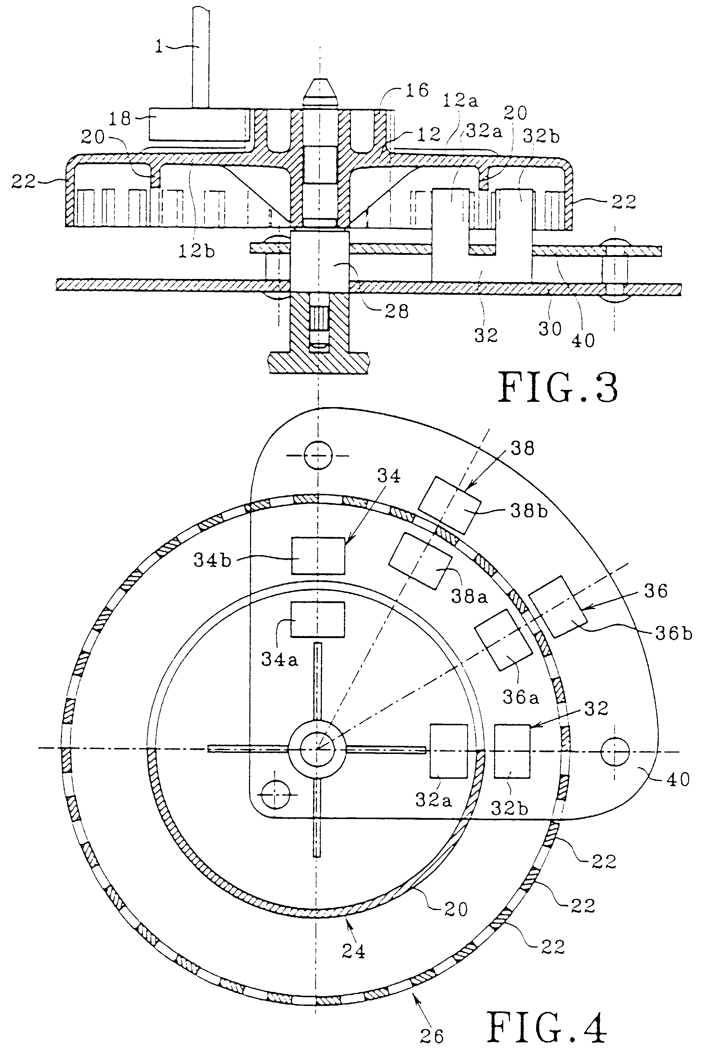

Comme représenté sur la figure 3, le dispositif 10 comprend une pièce mécanique 12 présentant un évidement central 14 traversant ladite pièce et comportant sur une de ses plus grandes faces 12a un pignon 16 destiné à s'engrener avec un autre pignon 18 solidaire de l'extrémité de l'axe 1 opposée à celle reliée à l'unité de mesure du compteur.
Les plus grandes faces 12a et 12b de la pièce 12 sont perpendiculaires à l'axe de rotation 1.
La pièce comporte sur la plus grande face opposée à celle qui porte le pignon 12b deux séries respectivement de D1 et D2 repères visuels ou dents qui s'étendent parallèlement à l'axe de rotation, les repères 20, 22 de chacune desdites séries étant disposés suivant deux cercles de rayon différent de manière à former deux roues dentées 24, 26 faisant partie intégrante de ladite pièce mécanique 12.

Ainsi que représenté sur la figure 4, une première roue 24 par exemple constituée d'une seule dent (D₁ = 1) occupe la moitié du cercle correspondant de rayon R1.
La seconde roue 26 est par exemple constituée de trente-deux dents (D₂=32) également réparties suivant le cercle correspondant de rayon R2 qui est environ le double du rayon R1 et qui est égal au rayon de la pièce mécanique 12.

La pièce 12 est montée à rotation sur un pivot 28, ce pivot étant destiné à s'engager dans l'évidement central 14. Le pivot est fixé à un support immobile 30, qui est dans l'exemple présent une carte électronique.

Le dispositif 10 comporte au moins un capteur optique 32 formé d'un émetteur 32a, par exemple une diode infrarouge, et d'un récepteur, par exemple un phototransistor.
Le capteur optique ainsi formé a une forme de U dont une des branches est constituée de l'émetteur et l'autre branche est constituée par le récepteur.

Le capteur optique est fixé par la base du U sur le support 30. L'émetteur et le récepteur du capteur 32 sont placés en regard l'un de l'autre et de part et d'autre de la trajectoire des dents 20 de la roue correspondante 24, comme le montrent les figures 3 et 4.
Dans l'exemple décrit, deux capteurs optiques 32, 34 sont associés à la roue dentée 24 et deux capteurs optiques 36, 38 sont associés à la roue dentée 26. Pour chacune des roues dentées, chaque capteur est disposé par rapport à l'autre capteur selon un angle égal à la moitié de la largeur d'une des dents.
Ainsi, pour la plus petite roue 24, les deux capteurs sont décalés de 90° et pour la plus grande roue 26, les capteurs sont décalés de 31°. Une platine 40 solidaire de la carte électronique 30 sert à positionner les différents capteurs optiques l'un par rapport à l'autre selon les dispositions géométriques précédemment précisées.
On peut également concevoir d'utiliser des capteurs non optiques associés à des repères non visuels liés à l'axe de rotation.

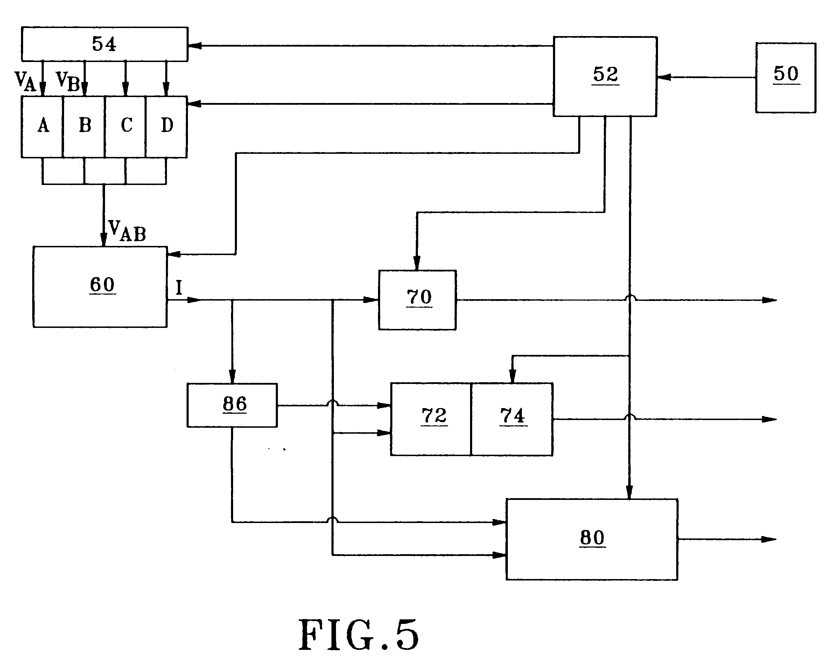

La figure 5 est une vue d'ensemble des principaux blocs fonctionnels du dispositif 10 de surveillance de l'évolution de la valeur courante du débit de fluide selon l'invention, nécessaires pour effectuer les différentes étapes du procédé selon l'invention.
Hormis les capteurs optiques et les roues dentées, ces blocs font partie d'un circuit intégré à application spécifique (ASIC) qui est implanté sur la carte électronique 30 précédemment évoquée. Ce circuit intégré gère les capteurs et assure le traitement électronique des informations provenant des capteurs.
Sur cette carte sont également implantés mais non représentés sur les figures un microcontroleur qui programme certains paramètres de gestion des capteurs (fréquences d'échantillonnage, valeurs prédéterminées de débit ...) et exploite les signaux fournis par le circuit intégré ainsi qu'une pile pour l'alimentation des différents éléments du dispositif selon l'invention.
Comme représenté sur la figure 5, une horloge mère 50 délivre une fréquence de base par exemple égale à 32 kHz et un bloc électronique diviseur de fréquence 52 permet, à partir de cette fréquence, de générer vers les différents blocs fonctionnels du dispositif 10 des signaux électriques sous la forme d'impulsions suivant des fréquences variables au cours du temps selon la loi d'échantillonnage prédéterminée.
Comme précédemment décrit, pour déterminer avec précision le débit de gaz de Q₀ à Qmax, on choisit une fréquence permettant de détecter la valeur courante du débit jusqu'à Q₁ = 1,25 Qₘₐₓ. La fréquence f₁ est égale par exemple à 2,5 fois la valeur que prend la fréquence de rotation de l'axe 1 lorsque la valeur courante du débit de gaz est égale à Qₘₐₓ.
De manière avantageuse, la fréquence f₂ est par exemple égale à l'expression └*Q*2/2*Q*'2┘ f₁, où └*x*┘ désigne le premier entier supérieur ou égal à x.
Par exemple, on choisit f₂ = 4f₁ pour Q₁ = 6 m³/h et Q₂ = 50 m³/h. On choisit également Q₀ égal à zéro, f1 est par exemple égale à 3,5HZ et f2 est égale à 14Hz.
L'utilisation de signaux impulsionnels générés suivant plusieurs fréquences judicieusement choisies permet de réduire considérablement la consommation électrique et donc d'augmenter la durée de vie de la pile, par comparaison avec un signal d'alimentation en continu, voire suivant une fréquence d'échantillonnage élevée, tout en surveillant l'évolution de la valeur courante du débit de gaz et notamment en déterminant avec la précision voulue Qₘₐₓ et en détectant un surdébit.

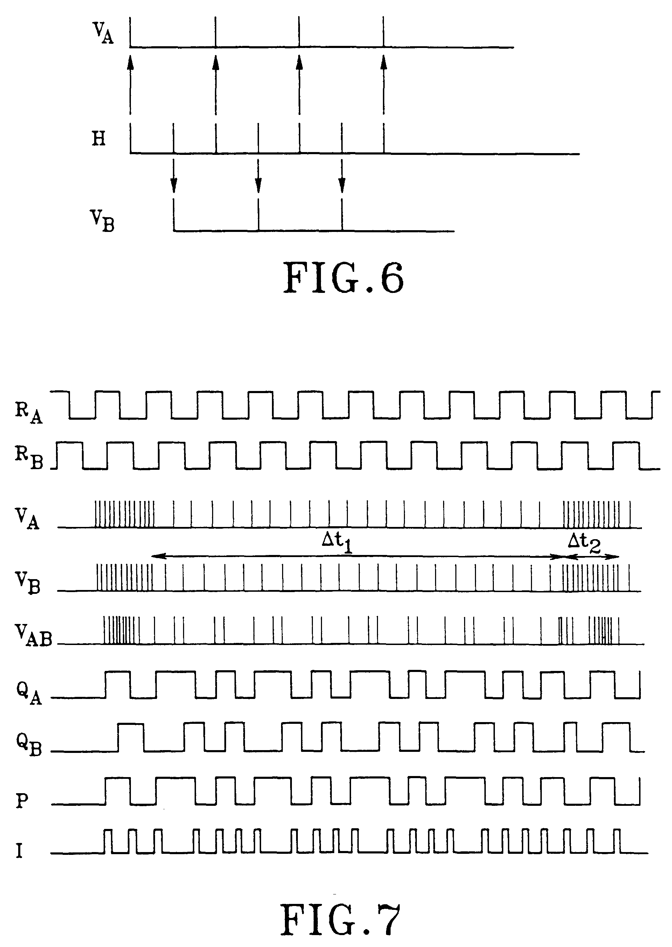

En régime normal de fonctionnement du compteur de gaz, un bloc de commutation 54 permet de sélectionner les deux capteurs optiques 32, 34 repérés A et B de la plus petite roue dentée 24 parmi les quatre capteurs 32, 34, 36, 38 , les capteurs 36 et 38 étant repérés C et D. A partir de l'horloge mère 50 , le bloc diviseur 52 génère de manière classique une séquence de signaux électriques appelée séquence d'horloge H se traduisant sous la forme d'impulsions successives au cours du temps formée d'une première série d'impulsions générées à la fréquence 2f₁ et d'une seconde série d'impulsions générées à la fréquence 2f₂ soit 8f₁.
Etant donné que dans l'exemple décrit on utilise deux capteurs optiques par roue, on alimente les diodes de chaque capteur A et B en alternance dans le temps ce qui nécessite de générer deux séquences d'impulsions à partir de la séquence de l'horloge mère 50. Ainsi, pour alimenter la diode du capteur A, on génère une séquence d'impulsions V_{A} à partir des impulsions paires de la séquence de l'horloge H, comme représenté sur la figure 6, et l'on obtient ainsi une première série de 20 impulsions écartées (fréquence f₁) suivie d'une seconde série de 13 impulsions plus rapprochées (fréquence f₂ = 4f₁).
De même, pour alimenter la diode du capteur B, on génère une séquence V_{B} d'impulsions à partir des impulsions impaires de la séquence de l'horloge H et l'on obtient ainsi une série de 21 impulsions écartées (fréquence f₁) suivie d'une seconde série de 12 impulsions (fréquence f₂) plus rapprochées.
Ces deux séquences V_{A} et V_{B} intercalées dans le temps sont représentées sur la figure 7.
Chaque série d'impulsions générées à la fréquence f₁ a une durée temporelle Δt₁ et chaque série d'impulsions générées à la fréquence f₂ a une durée temporelle Δt_{2.}
Chaque capteur optique A et B ainsi alimenté délivre en sortie un état binaire selon la position qu'il occupe par rapport à la dent 20 de la roue 24. Les capteurs optiques A et B étant décalés de 90°, les signaux R_{A} et R_{B} du haut de la figure 7 représentent le profil de la dent 20 de la roue 24 tel qu'il serait repéré par lesdits capteurs si ceux ci étaient alimentés en permanence. Les sorties des capteurs optiques A et B sont regroupées en "OU câblé" sur une seule entrée d'un bloc électronique 60 qui permet de déterminer si le mouvement de l'axe est un mouvement de rotation ou d'oscillation et de reconstituer le signal P correspondant au mouvement de rotation de l'axe au cours du temps tel que repéré par les capteurs A et B (fig.7).
Le signal à l'entrée du bloc 60 est représenté par V_{AB} sur la figure 7. On va maintenant former à partir des états de sortie binaires des capteurs optiques A et B un signal de sortie qui représente la succession au cours du temps des informations correspondant à une détection et à une non détection d'un mouvement de rotation de l'axe telles que repérées par lesdits capteurs optiques. Dans un premier temps, un démultiplexage des signaux V_{A} et V_{B} est effectué par échantillonnage du signal V_{AB} dans deux bascules Q_{A} et Q_{B}, sur les fronts descendants des impulsions respectives des séquences V_{A} et V_{B} d'alimentation des capteurs optiques A et B. Les sorties des bascules Q_{A} et Q_{B} sont représentées sur la figure 7.
Ensuite, un circuit 62 faisant partie du bloc électronique 60 et constitué d'inverseurs, de portes "NON ET" (NAND) et d'une bascule R/S permet de différencier les oscillations des rotations de l'axe en identifiant et sélectionnant les états de sortie binaires successifs des capteurs A et B.
La bascule R/S aura sa sortie forcée:
- à partir de son entrée "Set" par la valeur du produit logique "QA et inverse de QB",
- à partir de son entrée "Reset" par la valeur du produit logique "QB et inverse de QA".

Ce circuit 62 permet de détecter une rotation correspondant aux états successifs suivants: Q_{A} = 0, Q_{B} = 1, Q_{A} = 1, Q_{B} = 0, Q_{A} = 0.

Avantageusement, le fait de disposer d'au moins deux capteurs optiques par roue permet d'affiner la connaissance acquise sur le mouvement de l'axe.

Selon cette configuration, l'un des capteurs, le capteur A par exemple, sert à détecter le mouvement de rotation de l'axe alors que le capteur B sert à vérifier s'il s'agit bien d'une rotation et non d'une oscillation. En sortie de ce circuit 62, on obtient un signal reconstitué P correspondant au mouvement de rotation de l'axe au cours du temps tel que repéré par les capteurs optiques A et B.
Ce signal P représenté en bas de la figure 7 est constitué d'une succession d'états logiques 0 ou 1 accompagnés de fronts montants et descendants qui correspondent à des transitions de 0 vers 1 ou de 1 vers 0.
Chacune de ces transitions représente une détection d'un mouvement de rotation de l'axe ce qui correspond à un volume de gaz donné.

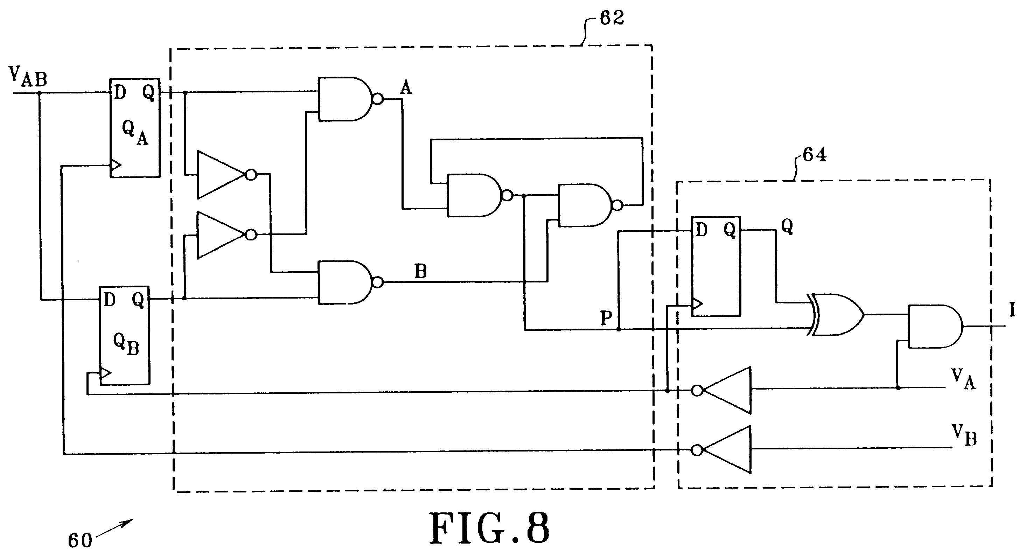

A partir du signal reconstitué P, on extrait les informations correspondant à une détection et à une non détection d'un mouvement de rotation de l'axe, pour produire un signal I de sortie (figure 7) qui représente directement l'apparition temporelle des informations de détection et de non détection sous la forme d'impulsions de détection telles qu'elles sont repérées par les capteurs A et B.
La production de ce signal à partir du signal reconstitué P est obtenue grâce à un circuit 64 du bloc 60 (fig.8) et qui est constitué d'une bascule D, d'une porte "OU exclusif" (XOR) et d'une porte "NON ET" (NAND). Il convient de préciser que cette étape de transformation du signal reconstitué P en signal I n'est pas obligatoire et l'on pourrait directement traiter électroniquement ledit signal P appelé alors signal de sortie au cours du traitement électronique dans la suite du procédé selon l'invention.
Selon une variante de l'invention, on peut n'utiliser qu'un capteur optique par roue. Dans ce cas on génère une seule séquence d'alimentation du capteur optique constituée d'une série d'impulsions générées à la fréquence f₁ pendant un intervalle de temps Δt₁ et d'une série d'impulsions générées à la fréquence f₂ pendant un intervalle de temps Δt₂.
Un bloc 70 de comptage des impulsions de détection provenant du signal I permet de compter uniquement ces impulsions dont la valeur logique est égale à 1 ce qui fournit une mesure en continu du volume de gaz ayant traversé l'unité de mesure du compteur.
Ce bloc 70 est par exemple constitué d'un compteur électronique de quatre bits.
On effectue alors un traitement électronique des informations correspondant à une détection et à une non détection d'un mouvement de rotation de l'axe suivant chaque fréquence d'échantillonnage f₁ et f₂ afin de déterminer sur un continuum de débits allant de
Q₀ à Q₂ (50m³/h) la valeur courante du débit de fluide par rapport aux valeurs prédéterminées Q₁ et Q₂.
Plus précisément, le procédé selon l'invention va permettre de déterminer la valeur courante du débit par rapport aux gammes de débits Q₀ - Q'₁ et Q'₂ - Q₂ et ainsi l'on pourra savoir si le compteur de gaz est en mode de comptage-sur sa gamme métrologique (0-Qₘₐₓ) ou en surdébit sur la gamme c (Q'₂ - Q₂).

La première étape du traitement consiste à sélectionner un nombre d'informations de détection et de non détection du signal de sortie I prédéfini et qui est choisi de manière différente suivant chacune des fréquences f₁ et f₂.
En régime normal de fonctionnement du compteur de gaz simultanément à l'alimentation des capteurs A et B à la fréquence d'échantillonnage f₁, on sélectionne un nombre prédéfini d'informations en les mémorisant dans un registre à décalage 72 constitué de I₁ bits à ladite fréquence d'échantillonnage f₁ et ce, pendant toute la durée dudit régime normal de fonctionnement. Chacune des informations est mémorisée à la fréquence f₁ sous la forme d'un "1" ou d'un "0" suivant qu'il s'agit d'une détection ou d'une non détection.

Afin de déterminer la valeur courante du débit de gaz, on effectue la somme des I₁ informations au moyen d'un bloc électronique qui est en fait un réseau de demi-sommateurs 74 au fur et à mesure que lesdites informations sont sélectionnées et mémorisées dans le registre.
Toutefois, pour obtenir une meilleure précision, il est nécessaire d'affecter à chacun des I₁ bits un coefficient de pondération. L'exemple décrit ci-après permettra de mieux comprendre l'intérêt de la pondération des bits du registre 72.
Supposons qu'une première information de détection ("1") soit mémorisée dans le registre et soit dotée d'une très bonne précision temporelle, c'est-à-dire que la transition (détection) a presque été détectée au moment où physiquement elle s'est produite.
Ensuite, d'autres informations ("0" ou "1") sont enregistrées dans le registre, celles-ci ayant par contre une très mauvaise précision temporelle, et une dernière information dotée d'une très bonne précision temporelle est enregistrée dans le premier bit dudit registre 72.
Dans ce cas précis, la première information enregistrée se trouve dans le dernier bit du registre, et entre les deux bits d'extrémités on dispose donc d'une référence temporelle précise ce qui, compte tenu des informations précises acquises sur le volume de gaz, permet d'accéder à une valeur moyennée de débit correcte.
Maintenant, l'information suivante qui est enregistrée dans le registre et qui est par exemple dotée d'une mauvaise précision temporelle fait disparaître la première information enregistrée sur le dernier bit du registre 72 et donc entache tout ledit registre d'une mauvaise précision ce qui peut conduire à une valeur moyennée de débit dégradée. Par conséquent, en affectant des coefficients de pondération aux bits du registre selon une loi particulière, cela permet de minimiser les effets d'entrée et de sortie des informations dans le registre.

Préférentiellement, un coefficient de pondération identique et maximal est attribué aux bits centraux et des coefficients respectivement croissants et décroissants sont affectés aux bits correspondant aux dernières et aux premières informations enregistrées.
Par exemple, I₁ est égal à 20, f₁ = 3,5Hz et ainsi I₁/f₁ est égal à 5,7s. Chaque information correspondant à une transition représente un débit de Qmax/16 soit 0,61/h.
La loi de pondération suivant la position d'un bit dans le registre est la suivante:
- pour les quatre premières positions, la valeur du poids augmente linéairement de 1 à 4,
- pour les douze positions centrales, le poids sera constant et égal à 5,
- et pour les quatre dernières positions, la valeur du poids diminue linéairement de 4 à 1.

Le bloc électronique 74 permet également d'effectuer la pondération de manière classique.
Au cours de l'enregistrement des informations et de leur pondération, le bloc électronique 74 effectue pas à pas la somme desdits informations pondérées.
La détection de la valeur Qₘₐₓ se fait par reconnaissance d'un résultat de sommation supérieur à 64 ce qui correspond à la présence de 16 informations de détection ou transitions dans le registre 72.

A partir de cette détection, un signal d'alarme est déclenché et indique au microprocesseur qu'un ordre de fermeture de la vanne située en amont du compteur doit être immédiatement généré.
Lorsque la somme est égale à 80, cela signifie que la valeur courante du débit est égale à 1,25 Qₘₐₓ (Q'₂).
A bout du temps correspondant à la mémorisation des 16 détections, on obtient une valeur de débit moyennée sur ce temps avec une très bonne précision par exemple de 1,8%.
D'une manière générale, la précision avec laquelle la valeur de débit moyennée est obtenue dépend du nombre d'informations I₁ ainsi que de la fréquence f₁.
Le temps I₁/f₁ doit permettre l'obtention de la précision voulue et le lissage du phénomène d'irrégularité du mouvement de rotation de l'axe.
Le traitement électronique des informations à la fréquence d'échantillonnage f₁ est réalisé en permanence dans le temps au cours du régime normal de fonctionnement afin de pouvoir déterminer à tout moment la valeur courante du débit de fluide sur la gamme métrologique du compteur. Au bout de l'intervalle de temps égal à Δt₁, on effectue le traitement électronique des informations correspondant à une détection et à une non détection d'un mouvement de rotation de l'axe suivant la fréquence d'échantillonnage f₂ pendant l'intervalle de temps Δt₂, c'est-à-dire simultanément à l'alimentation des capteurs A et B à ladite fréquence d'échantillonnage. Par exemple Δt₁ = 6s et Δt₂ = 0,9s.

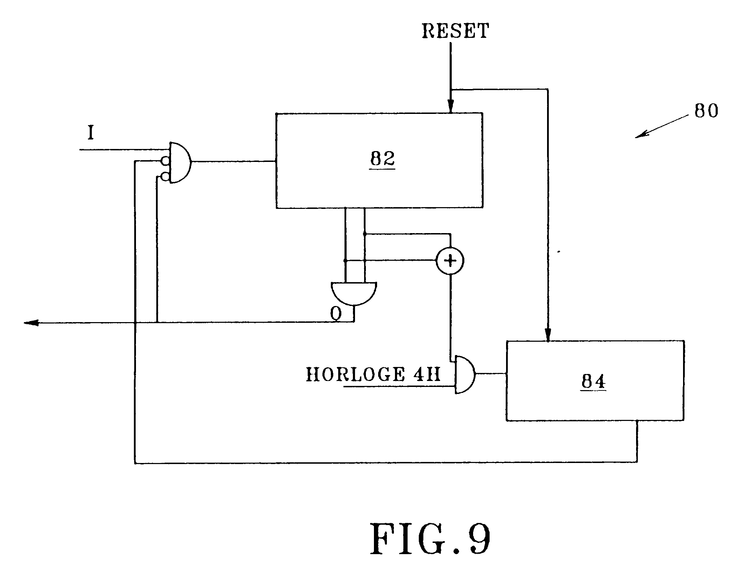

Le bloc 80 permet de sélectionner un nombre prédéfini I₂ d'informations, et d'identifier parmi ces I₂ informations le nombre de détections (transitions) présentes. Le nombre I₂ dépend de la fréquence f₂ et de la valeur prédéterminée Q₁ de débit ainsi que du nombre de dents D₁. Si ce nombre de détections est supérieur à un nombre prédéterminé I₃ qui dépend de Q₁ et du nombre de dents D₁ de la roue dentée, alors on sait que la valeur courante du débit de fluide est comprise dans la gamme de débit c, c'est à dire entre les valeurs prédéterminées Q'₂ et Q₂.
Pour détecter une valeur supérieure à la valeur prédéterminée Q'₂ = 1,25 Qmax, sur la roue 24 à une dent à la fréquence 4f₁, il suffit de savoir combien de fois les capteurs optiques A et B détectent de vraies rotations pour un tour de roue complet qui est effectué en sept périodes à ladite fréquence 4f₁.
Cela signifie que le seuil de détection consiste à savoir si les capteurs optiques A et B détectent plus de trois transitions parmi un nombre d'informations égal à 8, c'est-à-dire en sept périodes consécutives. Par conséquent, dans cet exemple I₂ = 8 et I₃ = 3.
Toutefois, ces nombres prédéterminés peuvent varier selon les valeurs prédéterminées de débit et les fréquences d'échantillonnage choisies.
Comme représenté à la figure 9, on dispose en entrée du bloc 80 d'une porte logique "ET" à entrées inversées, d'un compteur 2 bits 82 qui identifie le nombre I₃ prédéterminé de transitions et d'un compteur 84 qui sélectionne un nombre prédéfini I₂ d'échantillons consécutifs, c'est-à-dire un nombre de sept périodes de l'horloge 4f₁. Le schéma électronique très simple comprend en outre deux portes "ET".
Le principe d'utilisation de ce bloc 80 consiste à enregistrer des transitions dans le compteur 2 bits 82 tant que sept périodes successives de l'horloge 4f₁ ne se sont pas écoulées.
Dès que le compteur détecte trois transitions, l'enregistrement de nouvelles transitions est arrêté et un signal de détection de surdébit est généré et permet de fermer la vanne en amont du compteur.

Le dispositif 10 de surveillance de l'évolution de la valeur courante du débit de fluide permet aussi de détecter les fuites de gaz grâce à la bonne résolution obtenue sur la seconde roue dentée 26.
En effet, cette roue permet de détecter une rotation de 5,6° c'est à dire un volume de gaz de 0,018 litre.
Lorsque le compteur de gaz est placé en régime de détection de fuite, consécutivement à l'ouverture de la vanne amont, on cherche à détecter un débit de fuite de l'ordre de 5l/h pendant une durée par exemple égale à 50s. Le bloc de commutation 54 sélectionne les capteurs C et D de la seconde roue dentée et le bloc diviseur les alimente chacun alternativement dans le temps avec une série de signaux électriques se traduisant sous la forme d'impulsions de fréquence f₃ supérieure au produit du nombre de dents D₂ par la fréquence f₂ c'est-à-dire à trente-deux fois la fréquence d'échantillonnage f₂ = 1,4 Hz et par exemple égale à 512Hz.
Cette fréquence f₃ est choisie en fonction du nombre de dents D₂ de la roue 26 ainsi que de la fréquence f₂.
De manière analogue à ce qui a été décrit précédemment, les capteurs C et D délivrent en sortie des informations binaires qui sont mémorisées et utilisées par les bascules D et R/S du bloc 60 pour former le signal de sortie I représentant l'apparition temporelle des informations de détection et de non détection sous la forme d'impulsions telles qu'elles sont repérées par les capteurs C et D. Le compteur 4 bits 70 compte alors le nombre d'impulsions correspondant à une détection de mouvement de l'axe pendant la durée précitée (50s), envoie le résultat du comptage au microcontroleur et, dès qu'un nombre donné d'impulsions est enregistré, un signal de fermeture de vanne est déclenché par le microcontroleur. Ce nombre représente une valeur prédéterminée Q3 de débit de fluide atteinte, appelée débit de fuite, avec Q₃ < Q₁ et par exemple Q₃ = 5l/h.
Selon une variante de l'invention, le microcontroleur lit directement les informations de détection d'un mouvement de rotation de l'axe à partir des sorties des bascules Q_{A} et Q_{B} du bloc 60.
Simultanément à l'opération de comptage des informations de détection d'un mouvement de rotation de l'axe à partir du signal de sortie I, un bloc diviseur de fréquence 86 divise la fréquence dudit signal par 32 qui correspond au nombre de dents 22 de la plus grande roue 26 afin de pouvoir réutiliser les mêmes blocs fonctionnels 72, 74 et 80.
Pendant toute la durée du régime de détection de fuite, on traite alors électroniquement les informations fournies par le signal de sortie simultanément aux fréquences d'échantillonnage respectives f₁ et f₂ de manière identique à ce qui a déjà été décrit par rapport aux blocs fonctionnels 72, 74 et 80.
Le résultat de ce traitement simultané permet de manière avantageuse de surveiller l'évolution du débit jusque sur les gammes de débits incluant les valeurs prédéterminées Q₁ et Q2 durant le régime de détection d'un débit de fuite.

Avantageusement, en raison du caractère variable de la fréquence d'échantillonnage, il est possible d'adapter les valeurs de la fréquence d'échantillonnage f₁, f₂, f₃ utilisées précédemment à tout volume unitaire de fluide caractéristique d'une unité de mesure d'un compteur de fluide donné, ce qui permet d'étalonner ledit compteur sans qu'il soit nécessaire d'effectuer une correction ultérieure du débit échantillonné.

## Revendications

1. Procédé de surveillance de l'évolution de la valeur courante d'un débit de fluide dans un compteur de fluide qui comprend une unité de mesure et un axe de rotation (1) relié à ladite unité de mesure et apte à entrer en rotation autour de lui même lorsqu'un volume de fluide traverse l'unité de mesure, caractérisé en ce qu'il consiste à détecter les mouvements de rotation et de non rotation de l'axe suivant une fréquence dite d'échantillonnage variable selon une loi d'échantillonnage prédéterminée, ladite fréquence étant définie en fonction d'au moins une valeur prédéterminée de débit de fluide et à traiter électroniquement des informations correspondant à une détection et à une non détection d'un mouvement de rotation de l'axe suivant ladite fréquence d'échantillonnage afin de déterminer, sur un continuum de débits, la valeur courante du débit de fluide par rapport à la valeur prédéterminée de débit de fluide incluse dans ledit continuum de débits.

2. Procédé selon la revendication 1, caractérisé en ce que l'on détecte les mouvements de rotation et de non rotation de l'axe (1) suivant au moins deux valeurs f₁ et f₂ de la fréquence d'échantillonnage prédéterminés par la loi d'échantillonnage de telle façon que f₁ soit définie en fonction d'une première valeur prédéterminée de débit de fluide Q₁, f₂ soit définie en fonction de Q₁ et d'une deuxième valeur prédéterminée de débit de fluide Q₂, f₁ < f₂ et Q₁ < Q₂, et qu'ainsi les fréquences f₁ et f₂ définissent deux gammes de débits du continuum qui se recouvrent partiellement, l'une allant jusqu'à une valeur de débit Q'₁ définie par la fréquence f₁, avec Q₁ < Q'₁ < Q₂, et l'autre allant d'une valeur de débit Q'₂ définie par ladite fréquence f₁ jusqu'à la valeur Q₂, avec Q₁ < Q'₂ < Q'₁, et l'on traite électroniquement les informations suivant lesdites fréquences f₁ et f₂ afin de déterminer la valeur courante du débit de fluide par rapport auxdites gammes de débits.

3. Procédé selon la revendication 1 ou 2, caractérisé en ce que avant de traiter électroniquement les informations ledit procédé consiste à effectuer les étapes suivantes:
1) on génère plusieurs signaux électriques consécutifs suivant la fréquence d'échantillonnage variable selon la loi d'échantillonnage prédéterminée,
2) on alimente avec chacun desdits signaux électriques au moins un capteur (32, 36) placé en regard de la trajectoire d'au moins un repère (20,22) associé à l'axe de rotation et destiné à délivrer un état de sortie binaire selon la position dudit capteur par rapport audit repère,
3) à partir desdits états de sortie binaires, on forme un signal de sortie qui représente la succession temporelle des informations correspondant à une détection et à une non détection d'un mouvement de rotation de l'axe, chaque détection représentant un volume de fluide donné.

4. Procédé selon les revendications 1 à 3, caractérisé en ce que au cours de l'étape 1):
a) durant un premier intervalle de temps Δt₁, on génère au moins un signal électrique suivant la fréquence f1,
b) durant un second intervalle de temps Δt₂ consécutif à Δt₁, on génère au moins un signal électrique suivant la fréquence f2,
c) et l'on répète les étapes précédentes.

5. Procédé selon les revendications 1 à 4, caractérisé en ce que:
a) on traite électroniquement en permanence à la fréquence d'échantillonnage f₁ les informations de détection et de non détection du mouvement de rotation de l'axe (1) issues du signal de sortie,
b) au bout d'un intervalle de temps Δt₁ de traitement électronique des informations à ladite fréquence f₁, simultanément on traite électroniquement des informations de détection et de non détection du mouvement de rotation de l'axe (1) issues dudit signal de sortie à la fréquence d'échantillonnage f₂,
c) et l'on répète les étapes précédentes.

6. Procédé selon l'une des revendications 2, 4 et 5, caractérisé en ce que la fréquence f2 dépend de la fréquence f₁.

7. Procédé selon l'une des revendications 2, 4, 5, 6, caractérisé en ce que la fréquence f2 est supérieure ou égale à *└Q*₂*f*₁/2*Q*'₂┘ f₁, où └*x*┘ représente le premier entier supérieur ou égal à x.

8. Procédé selon l'une des revendications 2, 4, 5, 6, 7, caractérisé en ce que la fréquence d'échantillonnage f₁ est strictement supérieure à deux fois la valeur de la fréquence de rotation de l'axe qui est obtenue lorsque la valeur courante du débit de fluide est égale à Q₁.

9. Procédé selon la revendication 3, caractérisé en ce que l'on associe une pluralité de repères (22) à l'axe de rotation (1).

10. Procédé selon les revendications 3, 4 et 9, caractérisé en ce qu'au lieu de générer plusieurs signaux consécutifs aux fréquences respectives f₁ et f₂, on génère en permanence plusieurs signaux consécutifs suivant une fréquence d'échantillonnage f₃ supérieure à la fréquence f₂ et choisie en fonction d'une valeur prédéterminée de débit de fluide Q₃, avec Q₃ < Q₁, de f₂ et du nombre de repères et l'on compte le nombre de détections de mouvement de rotation de l'axe afin de déterminer la valeur courante du débit de fluide par rapport aux valeurs prédéterminées Q₁ et Q₃.

11. Procédé selon la revendication 10, caractérisé en ce que simultanément, on traite électroniquement en permanence aux fréquences d'échantillonnage f₁ et f₂ les informations du signal de sortie pour déterminer la valeur courante du débit de fluide par rapport aux valeurs prédéterminées Q₁ et Q₂ et plus particulièrement par rapport aux deux gammes de débits.

12. Procédé selon la revendication 10, caractérisé en ce que la fréquence f₃ est supérieure au produit du nombre de repères (22) par la fréquence f₂.

13. Procédé selon la revendication 5 ou 11, caractérisé en ce que au cours du traitement électronique des informations à la fréquence d'échantillonnage f₁, on sélectionne un nombre I₁ d'informations en les mémorisant à la fréquence d'échantillonnage f₁ pendant un intervalle de temps I₁/f₁, on somme ces I₁ informations au fur et à mesure de leur mémorisation afin de déterminer avec une précision qui dépend de I₁ et de f₁ la valeur courante du débit de fluide jusqu'à la valeur prédéterminée Q'₂.

14. Procédé selon la revendication 13, caractérisé en ce que avant de sommer les I₁ informations, on leur affecte à chacune un coefficient de pondération, ceci afin d'améliorer la précision sur la détermination de la valeur courante du débit de fluide.

15. Procédé selon les revendications 13 et 14, caractérisé en ce que l'on mémorise les I₁ informations dans un registre à décalage (72) constitué de I₁ bits et l'on affecte un coefficient de pondération identique et maximal pour chacun des bits centraux et des coefficients respectivement croissants et décroissants pour les bits correspondant aux dernières et aux premières informations mémorisées.

16. Procédé selon la revendication 5 ou 11, caractérisé en ce que au cours du traitement électronique des informations à la fréquence d'échantillonnage f₂, on sélectionne un nombre prédéfini I₂ d'informations du signal de sortie et l'on identifie le nombre d'informations de détections du mouvement de l'axe parmi ces I₂ informations, si le nombre identifié est au moins égal à un nombre prédéterminé I₃ alors la valeur courante du débit de fluide est comprise entre les valeurs prédéterminées de débit de fluide Q'₂ et Q₂ et, dans la négative, ladite valeur courante est inférieure à Q'₂.

17. Procédé selon la revendication 16, caractérisé en ce que le nombre prédéfini I₂ d'informations dépend de f₂, de Q₁ et du nombre de repères (20).

18. Procédé selon la revendication 16, caractérisé en ce que le nombre I₃ dépend de Q₁ et du nombre de repères (20).

19. Procédé selon la revendication 1, caractérisé en ce que préalablement à la reconstitution du signal, on détermine si le mouvement de l'axe (1) est un mouvement de rotation ou d'oscillation en alimentant en alternance un autre capteur (34, 38) et en identifiant et sélectionnant les états de sortie binaires successifs des capteurs.

20. Procédé selon la revendication 2 ou 19, caractérisé en ce que le capteur est un capteur optique (32, 34, 36, 38).

21. Compteur de fluide comprenant une unité de mesure d'un volume de fluide à laquelle est relié un axe de rotation (1) dont chaque tour représente un volume de fluide traversant ladite unité de mesure et un dispositif (10) de surveillance de l'évolution de la valeur courante du débit de fluide à partir de la rotation dudit axe (1) pour la mise en oeuvre du procédé selon l'une des revendications 1 à 20, caractérisé en ce que ledit dispositif (10) comprend
- au moins un capteur (32, 36) placé en regard de la trajectoire d'au moins un repère (20, 22) associé à l'axe de rotation (1) et destiné à délivrer une information binaire selon la position dudit capteur par rapport audit repère,
- des moyens (50, 52) de génération de signaux électriques consécutifs suivant une fréquence dite d'échantillonnage variable selon une loi d'échantillonnage prédéterminée pour l'alimentation dudit capteur optique, chaque valeur de fréquence étant définie en fonction d'au moins une valeur prédéterminée de débit de fluide
- des moyens (60, 62) de formation d'un signal de sortie à partir d'états de sortie binaires délivrés par le capteur (32, 36), ledit signal de sortie représentant la succession temporelle des informations de détection et de non détection d'un mouvement de rotation de l'axe,
- des moyens de traitement électronique (72, 74, 80) desdites informations suivant ladite fréquence d'échantillonnage afin de déterminer, sur un continuum de débits, la valeur courante du débit de fluide par rapport à la valeur prédéterminée du débit de fluide dont dépend la valeur de la fréquence d'échantillonnage.

22. Compteur de fluide selon la revendication 21, caractérisé en ce que les moyens de traitement électronique des informations comprennent notamment des moyens pour sélectionner un nombre d'informations du signal de sortie prédéfini et différent suivant chaque valeur prise par la fréquence d'échantillonnage.

23. Compteur de fluide selon les revendications 21 et 22, caractérisé en ce que les moyens de traitement électronique des informations comprennent des moyens (72) pour sélectionner un nombre prédéfini I₁ d'informations du signal de sortie à une valeur f₁ de la fréquence d'échantillonnage choisie en fonction d'une valeur prédéterminée de débit de fluide Q₁, lesdits moyens étant des moyens de mémorisation, ainsi que des moyens de sommation (74) des I₁ informations mémorisées pour déterminer avec une précision dépendant de I₁ et f₁ la valeur courante du débit de fluide sur une gamme de débits du continuum allant jusqu'à une valeur supérieure à Q₁ et définie par le choix de f₁.

24. Compteur de fluide selon la revendication 23, caractérisé en ce que les moyens de mémorisation des informations comprennent au moins un registre à décalage (72) constitué de I₁ bits destinés à recevoir chacun une information à la fréquence d'échantillonnage f₁.

25. Compteur de fluide selon les revendications 23 et 24, caractérisé en ce que les moyens de traitement électronique comprennent également des moyens de pondération (74) des I₁ bits suivant une loi affectant un coefficient de pondération identique et maximal pour chacun des bits centraux et des coefficients de pondération respectivement croissants et décroissants pour les bits correspondant aux dernières et aux premières informations mémorisées, ladite loi de pondération, permettant d'améliorer la précision sur la détermination de la valeur courante du débit.

26. Compteur de fluide selon les revendications 21 et 22 et l'une des revendications 23 à 25 , caractérisé en ce que les moyens de traitement électronique (80) des informations comprennent des moyens (84) pour sélectionner un nombre prédéfini I₂ d'informations du signal de sortie à une valeur f₂ de la fréquence d'échantillonnage f₂ dépendant de f₁, de Q₁ et d'une deuxième valeur prédéterminée de débit de fluide Q₂ f₁ < f₂ et Q₁ < Q₂, I₂ dépendant de f₂, de Q₁ et du nombre de repères (20), ainsi que des moyens (82) pour identifier parmi ces I₂ informations le nombre d'informations de détection du mouvement de l'axe, ce nombre permettant de déterminer si la valeur courante du débit de fluide est comprise dans la gamme de débits allant jusqu'à la valeur supérieure à Q₁ ou dans une gamme s'étendant de ladite valeur jusqu'à Q_{2.}

27. Compteur de fluide selon la revendication 21, caractérisé en ce que le capteur est un capteur optique (32, 36) et les repères sont des repères visuels (20,22).

28. Compteur de fluide selon les revendications 21 et 27, caractérisé en ce que le dispositif (10) de surveillance de l'évolution de la valeur courante du débit de fluide comprend une roue (24) liée au mouvement de rotation de l'axe (1) et qui est pourvue un nombre de dents (20) ou repères visuels égal à D1.

29. Compteur de fluide selon la revendication 28, caractérisé en ce que le dispositif (10) de surveillance de l'évolution de la valeur courante du débit de fluide comprend une autre roue (26) liée au mouvement de rotation de l'axe et qui est pourvue d'un nombre de dents (22) ou repères visuels égal à D2, D2 >D1.

30. Compteur de fluide selon la revendication 21, caractérisé en ce que le dispositif (10) de surveillance de l'évolution de la valeur courante du débit de fluide comprend des moyens (34, 38, 62) pour déterminer si le mouvement de l'axe (1) est un mouvement de rotation ou d'oscillation.

31. Compteur de fluide selon les revendications 27 à 30, caractérisé en ce que les moyens pour déterminer si le mouvement de l'axe est un mouvement de rotation ou d'oscillation comprennent un deuxième capteur optique (34, 38) pour chaque roue (24, 26) disposé par rapport au premier capteur optique selon un angle égal à la moitié de la largeur d'une des dents (20, 22) ainsi que des moyens de traitement électronique (62) d'identification et de sélection des états de sortie successifs des capteurs optiques.

32. Compteur de fluide selon l'une des revendications 28, 29, et 31, caractérisé en ce que chaque capteur optique (32, 34, 36, 38) est formé d'un émetteur (32a, 34a, 36a, 38a) et d'un récepteur (32b, 34b, 36b, 38b) placés en regard l'un de l'autre et de part et d'autre de la trajectoire des dents (20, 22) de la roue (24, 26).

## Patentansprüche

1. Verfahren zur Überwachung der Entwicklung des aktuellen Werts eines Fluiddurchsatzes in einem Fluidzähler, der eine Meßeinheit und eine mit dieser Meßeinheit verbundene Drehachse (1) aufweist, die sich um sich selbst drehen kann, wenn ein Fluidvolumen die Meßeinheit durchströmt, dadurch gekennzeichnet, daß die Drehbewegungen und die Nicht-Drehbewegungen der Achse gemäß einer variablen Abtastfrequenz entsprechend einem vorbestimmten Abtastgesetz erfaßt werden, wobei die Frequenz abhängig von wenigstens einem vorbestimmten Wert des Fluiddurchsatzes definiert ist, und daß die einer Erfassung und einer Nicht-Erfassung einer Drehbewegung der Achse mit der Abtastfrequenz entsprechenden Informationen elektronisch verarbeitet werden, um in einem Kontinuum von Durchsätzen den aktuellen Wert des Fluiddurchsatzes in bezug auf den vorbestimmten Wert des Fluiddurchsatzes, der in dem Kontinuum von Durchsätzen enthalten ist, zu bestimmen.

2. Verfahren nach Anspruch 1, dadurch gekennzeichnet, daß die Drehbewegungen und die Nicht-Drehbewegungen der Achse (1) gemäß wenigstens zweier durch das Abtastgesetz vorbestimmter Werte f₁ und f₂ der Abtastfrequenz in einer Weise erfaßt werden, daß f₁ als Funktion eines ersten vorbestimmten Wertes des Fluiddurchsatzes Q₁ definiert ist, f₂ als Funktion von Q₁ und eines zweiten vorbestimmten Wertes des Fluiddurchsatzes Q₂ definiert ist, wobei f₁ < f₂ und Q₁ < Q₂ ist, und daß auf diese Weise die Frequenzen f₁ und f₂ zwei Bereiche des Durchsatzes des Kontinuums definieren, die sich teilweise überdecken, wobei der eine bis zu einem Wert des Durchsatzes Q'₁ geht, der durch die Frequenz f₁ definiert ist, wobei Q₁ < Q'₁ < Q₂, und der andere von einem Wert des Durchsatzes Q'₂, der durch die Frequenz f₁ definiert ist, bis zu einem Wert Q₂ geht, wobei Q₁ < Q'₂ < Q'₁ ist, und daß man die Informationen gemäß den Frequenzen f₁ und f₂ elektronisch verarbeitet, um den aktuellen Wert des Fluiddurchsatzes in bezug auf die Bereiche der Durchsätze zu bestimmen.

3. Verfahren nach Anspruch 1 oder 2, dadurch gekennzeichnet, daß vor dem elektronischen Verarbeiten der Informationen das Verfahren darin besteht, die folgenden Schritte durchzuführen:
1) mehrere aufeinanderfolgende elektrische Signale werden gemäß der variablen Abtastfrequenz entsprechend dem vorbestimmten Abtastgesetz erzeugt,
2) mit jedem der elektrischen Signale wird wenigstens ein Aufnehmer (32, 36) beaufschlagt, der gegenüber der Bahn wenigstens einer der Drehachse zugeordneten Markierung (20, 22) angeordnet und dafür vorgesehen ist, einen binären Ausgangszustand zu liefern, der der Position des Aufnehmers in bezug auf die Markierung entspricht,
3) ausgehend von den binären Ausgangszuständen wird ein Ausgangssignal gebildet, das die zeitliche Aufeinanderfolge der Informationen entsprechend einer Erfassung und einer Nicht-Erfassung einer Drehbewegung der Achse repräsentiert, wobei jede Erfassung ein gegebenes Fluidvolumen repräsentiert.

4. Verfahren nach den Ansprüchen 1 bis 3, dadurch gekennzeichnet, daß im Verlauf von Schritt 1:
a) während eines ersten Zeitintervalls Δt₁ wenigstens ein elektrisches Signal gemäß der Frequenz f₁ erzeugt wird,
b) während eines zweiten auf Δt₁ folgenden Zeitintervalls Δt₂ wenigstens ein elektrisches Signal gemäß der Frequenz f₂ erzeugt wird, und
c) die vorhergehenden Schritte wiederholt werden.

5. Verfahren nach den Ansprüchen 1 bis 4, dadurch gekennzeichnet, daß:
a) die Informationen der Erfassung der Nicht-Erfassung der Drehbewegung der Achse (1), die aus dem Ausgangssignal abgeleitet sind, permanent bei der Abtastfrequenz f₁ elektronisch verarbeitet werden,
b) am Beginn eines Zeitintervalls Δt₁ der elektronischen Verarbeitung der Informationen bei der Frequenz f₁ gleichzeitig elektronisch Informationen der Erfassung und der Nicht-Erfassung der Drehbewegung der Achse (1), die aus dem Ausgangssignal abgeleitet sind, bei der Abtastfrequenz f₂ verarbeitet werden, und
c) die vorhergehenden Schritte wiederholt werden.

6. Verfahren nach einem der Ansprüche 2, 4 und 5, dadurch gekennzeichnet, daß die Frequenz f₂ von der Frequenz f₁ abhängt.

7. Verfahren nach einem der Ansprüche 2, 4, 5, 6, dadurch gekennzeichnet, daß die Frequenz f2 größer oder gleich zu *└Q*_{*2*}*f*_{*1*}*/*2Q'_{*2*}*┘*f₁ ist, wobei └*x*┘ die erste ganze Zahl größer oder gleich x bezeichnet.

8. Verfahren nach einem der Ansprüche 2, 4, 5, 6, 7, dadurch gekennzeichnet, daß die Abtastfrequenz f₁ auf jeden Fall größer als das Zweifache des Wertes der Drehfrequenz der Achse ist, die sich ergibt, wenn der aktuelle Wert des Fluiddurchsatzes gleich Q₁ ist.

9. Verfahren nach Anspruch 3, dadurch gekennzeichnet, daß der Drehachse (1) mehrere Markierungen (22) zugeordnet sind.

10. Verfahren nach den Ansprüchen 3, 4 und 9, dadurch gekennzeichnet, daß anstelle der Erzeugung mehrerer aufeinanderfolgender Signale bei den jeweiligen Frequenzen f₁ bzw. f₂ permanent mehrere aufeinanderfolgende Signale gemäß einer Abtastfrequenz f₃ erzeugt werden, die größer ist als die Frequenz f₂ und als Funktion eines vorbestimmten Wertes des Fluiddurchsatzes Q₃, wobei Q₃ < Q₁ ist, von f₂ und der Anzahl der Markierungen gewählt ist, und die Anzahl der Erfassungen der Drehbewegung der Achse gezählt wird, um den aktuellen Wert des Fluiddurchsatzes in bezug auf die vorbestimmten Werte Q₁ und Q₃ zu bestimmen.

11. Verfahren nach Anspruch 10, dadurch gekennzeichnet, daß die Informationen des Ausgangssignals gleichzeitig bei den Abtastfrequenzen f₁ und f₂ elektronisch verarbeitet werden, um den aktuellen Wert des Fluiddurchsatzes in bezug auf die vorbestimmten Werte Q₁ und Q₂ zu bestimmen, und insbesondere in bezug auf die zwei Bereiche von Durchsätzen.

12. Verfahren nach Anspruch 10, dadurch gekennzeichnet, daß die Frequenz f₃ größer ist als das Produkt der Anzahl der Markierungen (22) mit der Frequenz f₂.

13. Verfahren nach Anspruch 5 oder 11, dadurch gekennzeichnet, daß im Verlauf der elektronischen Verarbeitung der Informationen bei der Abtastfrequenz f₁ eine Anzahl l₁ an Informationen ausgewählt werden, indem diese während eines Zeitintervalls l₁/f₁ mit der Abtastfrequenz f₁ gespeichert werden, und die l₁ Informationen in dem Maß ihrer Speicherung summiert werden, um mit einer Genauigkeit, die von l₁ und von f₁ abhängt, den aktuellen Wert des Fluiddurchsatzes bis zu dem vorbestimmten Wert Q'₂ zu bestimmen.

14. Verfahren nach Anspruch 13, dadurch gekennzeichnet, daß vor dem Summieren der l₁ Informationen jeder ein Gewichtungskoeffizient zugewiesen wird, um die Genauigkeit bei der Bestimmung des aktuellen Wertes des Fluiddurchsatzes zu verbessern.

15. Verfahren nach den Ansprüchen 13 und 14, dadurch gekennzeichnet, daß die l₁ Informationen in einem Schieberegister (72) gespeichert werden, das aus l₁ Bits besteht, und daß jedem der zentralen Bits ein identischer und maximaler Gewichtungskoeffizient zugewiesen wird und den Bits, die den letzten und den ersten gespeicherten Informationen entsprechen, jeweils zunehmende bzw. abnehmende Koeffizienten zugewiesen werden.

16. Verfahren nach Anspruch 5 oder 11, dadurch gekennzeichnet, daß im Verlauf der elektronischen Verarbeitung der Informationen bei der Abtastfrequenz f₂ eine vordefinierte Anzahl I₂ an Informationen aus dem Ausgangssignal ausgewählt werden und die Anzahl der Erfassungen der Bewegungen der Achse unter den I₂ Informationen identifiziert werden, wobei dann, wenn die identifizierte Anzahl wenigstens gleich einer vorbestimmten Anzahl I₃ ist, der aktuelle Wert des Fluiddurchsatzes zwischen den vorbestimmten Werten des Fluiddurchsatzes Q'₂ und Q₂ enthalten ist, und falls nicht, der aktuelle Wert kleiner als Q'₂ ist.

17. Verfahren nach Anspruch 16, dadurch gekennzeichnet, daß die vordefinierte Anzahl an Informationen I₂ von f₂, von Q₁ und von der Anzahl der Markierungen (20) abhängt.

18. Verfahren nach Anspruch 16, dadurch gekennzeichnet, daß die Anzahl I₃ von Q₁ und der Anzahl der Markierungen (20) abhängt.

19. Verfahren nach Anspruch 1, dadurch gekennzeichnet, daß vor der Wiederherstellung des Signals bestimmt wird, ob die Bewegung der Achse (1) eine Drehbewegung oder ein Oszillationsbewegung ist, indem im Wechsel ein weiterer Aufnehmer (34, 38) beaufschlagt wird und indem die aufeinanderfolgenden Zustände der binären Ausgänge der Aufnehmer identifiziert und ausgewählt werden.

20. Verfahren nach Anspruch 2 oder 19, dadurch gekennzeichnet, daß der Aufnehmer ein optischer Aufnehmer (32, 34, 36, 38) ist.

21. Fluidzähler mit einer Meßeinheit mit einem Fluidvolumen, mit der eine Drehachse (1) verbunden ist, bei der jede Umdrehung ein Fluidvolumen repräsentiert, das die Meßeinheit durchströmt hat, und mit einer Vorrichtung (10) zur Überwachung der Entwicklung des aktuellen Wertes des Fluiddurchsatzes ausgehend von der Drehung der Achse (1) zur Verwirklichung des Verfahrens nach einem der Ansprüche 1 bis 20, dadurch gekennzeichnet, daß die Vorrichtung (10) umfaßt:
- Wenigstens einen Aufnehmer (32, 36), der gegenüber der Bahn wenigstens einer Markierung (20, 22), die der Drehachse (1) zugeordnet ist, angeordnet ist und der dafür vorgesehen ist, eine binäre Information entsprechend der Position des Aufnehmers in bezug auf die Markierung zu liefern,
- Mittel (50, 52) zur Erzeugung von aufeinanderfolgenden elektrischen Signalen gemäß einer variablen Abtastfrequenz entsprechend einem vorbestimmten Abtastgesetz zur Beaufschlagung des optischen Aufnehmers, wobei jeder Wert der Frequenz abhängig von wenigstens einem vorbestimmten Wert des Fluiddurchsatzes definiert ist,
- Mittel (60, 62) zur Bildung eines Ausgangssignals ausgehend von den Zuständen der binären Ausgänge, die von dem Aufnehmer (32, 36) geliefert werden, wobei das Ausgangssignal die zeitliche Aufeinanderfolge der Erfassungs- und der Nicht-Erfassungs-Informationen einer Drehbewegung der Achse repräsentiert,
- Mittel (72, 74, 80) zur elektronischen Verarbeitung der Informationen gemäß der Abtastfrequenz, um in einem Kontinuum von Durchsätzen den aktuellen Wert des Fluiddurchsatzes in bezug auf den vorbestimmten Wert des Fluiddurchsatzes, von dem der Wert der Abtastfrequenz abhängt, zu bestimmen.

22. Fluidzähler nach Anspruch 21, dadurch gekennzeichnet, daß die Mittel zur elektronischen Verarbeitung der Informationen insbesondere Mittel zum Auswählen einer Anzahl an Informationen des Ausgangssignals aufweisen, die gemäß jedem von der Abtastfrequenz eingenommenen Wert vordefiniert und verschieden ist.

23. Fluidzähler nach den Ansprüchen 21 und 22, dadurch gekennzeichnet, daß die Mittel zur elektronischen Verarbeitung der Informationen Mittel (72) zum Auswählen einer vordefinierten Anzahl l₁ an Informationen aus dem Ausgangssignal bei einem Wert f₁ der Abtastfrequenz, der als Funktion eines vorbestimmten Wertes des Fluiddurchsatzes Q₁ ausgewählt ist, aufweisen, wobei die Mittel Mittel zur Speicherung sind, sowie Mittel (74) zur Summierung der l₁ gespeicherten Informationen aufweisen, um mit einer Genauigkeit, die von l₁ und f₁ abhängt, den aktuellen Wert des Fluiddurchsatzes auf einem Bereich der Durchsätze des Kontinuums zu bestimmen, der bis zu einem Wert geht, der größer als Q₁ ist und durch die Wahl von f₁ definiert ist.

24. Fluidzähler nach Anspruch 23, dadurch gekennzeichnet, daß die Mittel zur Speicherung der Informationen wenigstens ein Schieberegister (72) aufweisen, das aus l₁ Bits besteht, die dafür vorgesehen sind, jeweils eine Information mit der Abtastfrequenz f₁ aufzunehmen.

25. Fluidzähler nach den Ansprüchen 23 und 24, dadurch gekennzeichnet, daß die Mittel zur elektronischen Verarbeitung auch Mittel (74) zur Gewichtung der l₁ Bits gemäß einem Gesetz aufweisen, das jedem der zentralen Bits einen identischen und maximalen Gewichtungskoeffizient zuweist und den Bits, die den letzten und den ersten gespeicherten Informationen entsprechen, jeweils zunehmende bzw.abnehmende Gewichtungskoeffizienten zuweist, wobei das Gewichtungsgesetz die Verbesserung der Genauigkeit bei der Bestimmung des aktuellen Wertes des Durchsatzes ermöglicht.

26. Fluidzähler nach den Ansprüchen 21 und 22 und nach einem der Ansprüche 23 bis 25, dadurch gekennzeichnet, daß die Mittel (80) zur elektronischen Verarbeitung der Informationen Mittel (84) zum Auswählen einer vordefinierten Anzahl I₂ an Informationen aus dem Ausgangssignal bei einem Wert f₂ der Abtastfrequenz f₂, der von f₁, von Q₁ und einem zweiten vorbestimmten Wert des Fluiddurchsatzes Q₂ abhängt, wobei f₁ < f₂ und Q₁ < Q₂ ist, I₂ von f₂, von Q₁ und von der Anzahl der Markierungen (20) abhängt, sowie Mittel (82) zum Identifizieren der Anzahl an Erfassungs-Informationen der Bewegung der Achse unter den I₂ Informationen aufweisen, wobei diese Anzahl es ermöglicht zu bestimmen, ob der aktuelle Wert des Fluiddurchsatzes in dem Bereich an Durchsätzen enthalten ist, der bis zu einem Wert größer als Q₁ geht, oder ob er in einem Bereich enthalten ist, der sich von dem Wert bis zu Q₂ erstreckt.

27. Fluidzähler nach Anspruch 21, dadurch gekennzeichnet, daß der Aufnehmer ein optischer Aufnehmer (32, 36) ist und die Markierungen visuelle Markierungen (20, 22) sind.

28. Fluidzähler nach den Ansprüchen 21 und 27, dadurch gekennzeichnet, daß die Vorrichtung (10) zum Überwachen der Entwicklung des aktuellen Wertes des Fluiddurchsatzes ein Rad (24) aufweist, das mit der Drehbewegung der Achse (1) gekoppelt ist und das mit einer Anzahl von Zähnen (20) oder visuellen Markierungen versehen ist, die gleich D1 ist.

29. Fluidzähler nach Anspruch 28, dadurch gekennzeichnet, daß die Vorrichtung (10) zum Überwachen der Entwicklung des aktuellen Wertes des Fluiddurchsatzes ein weiteres Rad (26) aufweist, das mit der Drehbewegung der Achse gekoppelt ist und mit einer Anzahl von Zähnen (22) oder visuellen Markierungen versehen ist, die gleich zu D2 ist, wobei D2 > D1 ist.

30. Fluidzähler nach Anspruch 21, dadurch gekennzeichnet, daß die Vorrichtung (10) zum Überwachen der Entwicklung des aktuellen Wertes des Fluiddurchsatzes Mittel (34, 38, 62) aufweist, um zu bestimmen, ob die Bewegung der Achse (1) eine Drehbewegung oder eine Oszillationsbewegung ist.

31. Fluidzähler nach den Ansprüchen 27 bis 30, dadurch gekennzeichnet, daß die Mittel, um zu bestimmen, ob die Bewegung der Achse eine Drehbewegung oder eine Oszillationsbewegung ist, einen zweiten optischen Aufnehmer (34, 38) für jedes Rad (24, 26) aufweisen, der bezüglich des ersten optischen Aufnehmers in einem Winkel angeordnet ist, der gleich zur Hälfte der Größe eines der Zähne (20, 22) ist, sowie Mittel (62) zur elektronischen Verarbeitung, zur Identifizierung und zur Auswahl von aufeinanderfolgenden Ausgangszuständen der optischen Aufnehmer aufweisen.

32. Fluidzähler nach einem der Ansprüche 28, 29 und 31, dadurch gekennzeichnet, daß jeder optische Aufnehmer (32, 34, 36, 38) aus einem Sender (32a, 34a, 36a, 38a) und einem Empfänger (32b, 34b, 36b, 38b) gebildet ist, die einander gegenüber und beiderseits der Bahn der Zähne (20, 22) des Rades (24, 26) angeordnet sind.

## Claims

1. A method of monitoring variation in the current value of a rate of fluid flow through a fluid meter which includes a measurement unit and a rotary shaft (1) connected to said measurement unit and suitable for rotating about its own axis when a volume of fluid passes through the measurement unit, characterized in that it consists in detecting rotary and non rotary movements of the shaft at a sampling frequency that is variable in application of a predetermined sampling relationship, said frequency being defined as a function of at least one predetermined fluid flow rate value, and in electronically processing bits corresponding to detection and to non-detection of a rotary movement of the shaft at said sampling frequency in order to determine the current value of the fluid flow rate over a continuum of flow rates and relative to the predetermined fluid flow rate value included in said continuum of flow rates.

2. A method according to claim 1, characterized in that rotary and non rotary movements of the shaft (1) are detected at at least two sampling frequency values f1 and f2 predetermined by the sampling relationship in such a manner than f1 is defined as a function of a first predetermined fluid flow rate value Q1, and f2 is defined as a function of Q1 and of a second predetermine fluid flow rate value Q2, where f1 < f2 and Q1 < Q2, with the frequencies fl and f2 thus defining two ranges of flow rates of the continuum, which ranges overlap partially, one extending up to a flow rate value Q'1 defined by the frequency fl, where Q1 < Q'1 < Q2, and the other extending from a flow rate value Q'2 defined by said frequency fl and up to a value Q2, where Q1 < Q'2 < Q'1, and the bits are processed electronically as a function of said frequencies f1 and f2 in order to determine the current value of the fluid flow rate relative to said ranges of flow rates.

3. A method according to claim 1 or 2, characterized in that prior to processing the bits electronically, said method consists in performing the following steps:
1) a plurality of consecutive electrical signals are generated at the sampling frequency which is variable in application of the predetermined sampling relationship;
2) at least one sensor (32, 36) is powered with each of said electrical signals, said sensor being placed facing the path of at least one mark (20, 22) associated with the rotary shaft and being designed to deliver a binary output state depending on the position of said sensor relative to said mark; and
3) said binary output states are used to form an output signal representative of the succession in time of bits corresponding to detection and to non-detection of a rotary movement of the shaft, each detection representing a given volume of fluid.

4. A method according to claims 1 to 3, characterized in that during step 1):
a) during a first time interval Δt1, at least one electrical signal is generated at the frequency f1;
b) during a second time interval Δt2 consecutive to Δt1, at least one electrical signal is generated at the frequency f2; and
c) the above steps are repeated.

5. A method according to claims 1 to 4, characterized in that:
a) the bits representing detection and non-detection of rotary movement of the shaft (1) coming from the output signal are continuously processed electronically at the sampling frequency f1;
b) at the end of a time interval Δt1 during which the bits are electronically processed at said frequency fl, the bits representing detection and non-detection of rotary movement of the shaft (1) coming from said output signal are simultaneously processed electronically at the sampling frequency f2; and
c) the above two steps are repeated.

6. A method according to any one of claims 2, 4, and 5, characterized in that the frequency f2 depends on the frequency f1.

7. A method according to any one of claims 2, 4, 5, and 6, characterized in that the frequency f2 is greater than or equal to [ Q₂f₁/2Q'₂ ] f₁ where [ x ] represents the first integer greater than or equal to x.

8. A method according to any one of claims 2, 4, 5, 6, and 7, characterized in that the sampling frequency f1 is greater than twice the value of the rotary frequency of the shaft which is obtained when the current value of the fluid flow rate is equal to Q1.

9. A method according to claim 3, characterized in that a plurality of marks (22) are associated with the rotary shaft (1).

10. A method according to claims 3, 4, and 9, characterized in that instead of generating a plurality of consecutive signals at respective frequencies f1 and f₂, a plurality of consecutive signals are continuously generated at a sampling frequency f₃ greater than the frequency f2 and selected as a function of a predetermined fluid flow rate value Q3, where Q3 < Q1, as a function of f2, and as a function of the number of marks, and the number of detections of rotary movement of the shaft is counted in order to determine the current fluid flow rate value relative to the predetermined values Q1 and Q3.

11. A method according to claim 10, characterized in that simultaneously the bits of the output signal are continuously electronically processed at the sampling frequencies f1 and f2 to determine the current value of the fluid flow rate relative to the predetermined values Q1 and Q2, and more particularly relative to the two flow rate ranges.

12. A method according to claim 10, characterized in that the frequency f₃ is greater than the product of the number of marks (22) multiplied by the frequency f2.

13. A method according to claim 5 or 11, characterized in that during electronic processing of the bits at the sampling frequency f1, a number I1 of bits are selected by being stored at the sampling frequency fl over a time interval I1/f1, the I1 bits are summed as they are stored in order to determine the current fluid flow rate value up to the predetermined value Q'2 with accuracy that depends on I1 and f1.

14. A method according to claim 13, characterized in that prior to summing the I1 bits, each of them is given a weighting coefficient so as to improve accuracy in determining the current fluid flow rate value.

15. A method according to claims 13 and 14, characterized in that the I1 bits are stored in a shift register (72) having I1 bit positions, and an identical and maximum weighting coefficient is given to each of the central bit positions while respectively increasing and decreasing coefficients are given to the bit positions corresponding to the last and first bits stored.

16. A method according to claim 5 or 11, characterized in that during electronic processing of the bits at the sampling frequency f2, a predefined number I2 of output signal bits are selected and the number of bits in said I2 bits and representing detections of shaft movement is identified, and if the identified number is not less than a predetermined number I3, then the current fluid flow rate value lies between the predetermined fluid flow rate values Q'2 and Q2, otherwise said current value is less than Q'2.

17. A method according to claim 16, characterized in that the predefined number I2 of bits depends on f2, Q1, and on the number of marks (20).

18. A method according to claim 16, characterized in that the number I3 depends on Q1, and on the number of marks (30).

19. A method according to claim 1, characterized in that prior to reconstituting the signal, it is determined whether the movement of the shaft (1) is a rotary movement or an oscillatory movement by powering another sensor (34, 38) in alternation and by identifying and selecting the successive binary output states of the sensors.

20. A method according to claim 2 or 19, characterized in that the sensor is an optical sensor (32, 34, 36, 38).

21. A fluid meter comprising a measurement unit for measuring a volume of fluid, which unit is connected to a rotary shaft (1) for which each revolution represents a volume of fluid passing through said measurement unit, and an apparatus (10) for monitoring variation in the current value of the fluid flow rate on the basis of rotation of said shaft (1) to implement the method according to any one of claims 1 to 20, characterized in that said apparatus (10) comprises:
- at least one sensor (32, 36) placed facing the path of at least one mark (20, 22) associated with the rotary shaft (1) and designed to deliver an output bit depending on the position of said sensor relative to said mark,
- means (50, 52) for generating consecutive electrical signals at a sampling frequency that is variable in application of a predetermined sampling relationship to power said optical sensor, each frequency value being defined as a function of at least one predetermined fluid flow rate value;
- means (60, 62) for forming an output signal on the basis of the binary output states delivered by the sensor (32, 36), said output signal representing the succession in time of bits corresponding to detection and non-detection of a rotary movement of the shaft; and
- electronic bit processing means (72, 74, 80) for processing said bits depending on said sampling frequency in order to determine the current value of the fluid flow rate over a continuum of flow rates and relative to the predetermined fluid flow rate value on which the value of the sampling frequency depends.

22. A fluid meter according to claim 21, characterized in that the electronic bit processing means, comprise, in particular, means for selecting a predefined number of bits of the output signal which number is different for each value taken by the sampling frequency.

23. A fluid meter according to claims 21 and 22, characterized in that the electronic bit processing means comprise means (22) for selecting a predefined number I1 of output signal bits at a value f1 of the sampling frequency selected as a function of a predetermined fluid flow rate value Q1, said means being storage means, together with summing means (74) for summing the stored I1 bits to determine the current value of the fluid flow rate over a range of flow rates of the continuum extending up to a value greater than Q1 and defined by the value selected for f1, with said determination having accuracy that depends on I1 and f1.

24. A fluid meter according to claim 23, characterized in that the bit storage means comprise at least one shift register (72) constituted by I1 bit positions each designed to receive one bit at the sampling frequency f1.

25. A fluid meter according to claims 23 and 24, characterized in that the electronic processing means also comprise weighting means (74) for weighting the I1 bits in application of a relationship that applies an identical and maximum weighting coefficient to each of the central bit positions and respectively increasing and decreasing weighting coefficients for the bit positions corresponding to the last and first stored bits, said weighting relationship serving to improve the accuracy with which the current flow rate value is determined.

26. A fluid meter according to claims 21 and 22 and any one of claims 23 to 25, characterized in that the electronic bit processing means (80) comprise means (84) for selecting a predefined number I2 of bits of the output signal at a value f2 for the sampling frequency, f2 depending on f1, on Q1, and on a second predetermined fluid flow rate value Q2, where f1 < f2 and Q1 < Q2, I2 depending on f2, on Q1, and on the number of marks (20), and also means (82) for identifying amongst said I2 bits the number of bits representing detection of shaft movement, said number serving to determine whether the current fluid flow rate value lies in the range of flow rates going up to the value greater than Q1, or in a range that extends from said value up to Q2.

27. A fluid meter according to claim 21, characterized in that the sensor is an optical sensor (32, 36) and the marks are visible marks (20, 22).

28. A fluid meter according to claims 21 and 27, characterized in that the apparatus (10) for monitoring variation in the current value of a fluid flow rate includes a wheel (24) constrained to rotate with rotation of the shaft (1) and provided with a number of teeth (20) or visible marks equal to D1.

29. A fluid meter according to claim 28, characterized in that the apparatus (10) for monitoring variation in the current value of the fluid flow rate includes another wheel (26) constrained to rotate with rotation of the shaft and provided with a number of teeth (22) or visible marks equal to D2, where D2 > D1.

30. A fluid meter according to claim 21, characterized in that the apparatus (10) for monitoring variation in the current value of the fluid flow rate include means (34, 38, 62) for determining whether the movement of the shaft (1) is a rotary movement or an oscillator movement.

31. A fluid meter according to claims 27 to 30, characterized in that the means for determining whether the movement of the shaft is a rotary movement or an oscillatory movement comprise a second optical sensor (34, 38) for each wheel (24, 26) and disposed relative to the first optical sensor at an angle equal to half the width to one of the teeth (20, 22), together with electronic processing means (62) for identifying and selecting the successive output states of the optical sensors.

32. A fluid meter according to any one of claims 28, 29, and 31, characterized in that each optical sensor (32, 34, 36, 38) is constituted by an emitter (32a, 34a, 36a, 38a) and a receiver (32b, 34b, 36b, 38b) placed facing each other on either side of the path of teeth (20, 22) of the wheel (24, 26).
